(19) Europäisches Patentamt
European Patent Office
Office européen des brevets

(11) **EP 4 730 824 A1**

(12) **EUROPEAN PATENT APPLICATION**
published in accordance with Art. 153(4) EPC

(43) Date of publication:
**22.04.2026 Bulletin 2026/17**

(21) Application number: **24836386.3**

(22) Date of filing: **05.07.2024**

(51) International Patent Classification (IPC):
**H04N 23/54** *(2023.01)* **H04N 23/55** *(2023.01)*
**H04N 23/57** *(2023.01)* **G03B 17/12** *(2021.01)*
**G03B 30/00** *(2021.01)* **G02B 13/00** *(2006.01)*
**G02B 15/14** *(2006.01)* **G02B 5/20** *(2006.01)*

(52) Cooperative Patent Classification (CPC):
**G02B 5/20; G02B 13/00; G02B 15/14; G03B 17/12;
G03B 30/00; H04N 23/54; H04N 23/55; H04N 23/57**

(86) International application number:
**PCT/KR2024/009605**

(87) International publication number:
**WO 2025/009939 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2023 KR 20230087255
25.08.2023 KR 20230112302**

(71) Applicant: **Samsung Electronics Co., Ltd.
Suwon-si, Gyeonggi-do 16677 (KR)**

(72) Inventors:
• **KIM, Dongwoo
Suwon-si, Gyeonggi-do 16677 (KR)**
• **BAE, Jaecheol
Suwon-si, Gyeonggi-do 16677 (KR)**

(74) Representative: **HGF
HGF Limited
4th Floor, 1 City Square
Leeds LS1 2ES (GB)**

(54) **CAMERA MODULE AND ELECTRONIC DEVICE COMPRISING SAME**

(57)    According to one embodiment disclosed herein, a camera module may comprise: a lens assembly; and an image sensor arranged to receive light focused or guided by the lens assembly. According to one embodiment, the lens assembly comprises at least three lenses arranged along the optical axis direction from an object side to an image side. A first lens disposed closest to the object side among the at least three lenses has a positive refractive power, and the object-side surface of the first lens may be concave. Various other embodiments are possible.

FIG. 6

## Description

[Technical Field]

Various embodiments of the disclosure relate to a camera module that may be mounted on a small electronic device such as a wearable device, and an electronic device including same.

[Background Art]

As electronic, information, and communication technologies advance, various functions are being integrated into a single electronic device. For example, an electronic device (e.g., a smartphone) includes functions such as a sound reproduction device, an image capturing device, or an electronic notebook in addition to a communication function, and more diverse functions may be implemented in the smart phone through additional installation of applications. In addition to executing installed applications or stored functions, an electronic device may receive various information in real time by accessing a server or other electronic devices in a wired or wireless manner.

The increasing use of electronic devices in daily life has led to growing user demands for portability and usability of electronic devices. To satisfy such user demands, electronic devices that may be carried and used while worn on the body, similar to wristwatches or glasses (hereinafter referred to as "wearable electronic devices"), have become commercialized. Examples of wearable electronic devices may include head-mounted wearable devices (HMDs), smart glasses, smart watches (or bands), contact lens-type devices, ring-type devices, clothing/shoe/glove-type devices, and the like. These body-worn electronic devices are portable and may improve user accessibility. A "head-mounted wearable device" is a device that is worn on the user's head or face and projects an image onto the user's retina, allowing the user to view a virtual image in a three-dimensional space. For example, head-mounted wearable devices may be categorized into see-through types that provide augmented reality (AR) and see-closed types that provide virtual reality (VR). A see-through type head-mounted wearable device may be implemented in the form of glasses, for example and may provide the user with information about buildings, objects, or the like in the form of images or text in the space within the user's field of view. The see-closed type head-mounted wearable device outputs independent images to each of the user's eyes, providing exceptional immersion by delivering contents (such as games, movies, streaming, or broadcasts) from a mobile communication terminal or external input in the form of video or audio to a single user wearing the device. Additionally, head-mounted wearable devices may also be used to provide mixed reality (MR), which combines augmented reality (AR) and virtual reality (VR), or extended reality (XR).

The above-described information may be provided as related art for the purpose of assisting in understanding the disclosure. None of the above contents make an assertion or decision as to whether any of the above might be applicable as prior art with regard to the disclosure.

[Detailed Description of the Invention]

[Technical Solution]

According to an embodiment of the disclosure, a camera module may include a lens assembly and an image sensor arranged to receive light focused or guided by the lens assembly. According to an embodiment, the lens assembly may include at least three lenses arranged along the optical axis direction oriented to an image side from an object side and, among the at least three lenses, a first lens disposed closest to the object side has a positive refractive power, and the object-side surface of the first lens may be concave. According to an embodiment, the lens assembly may satisfy [Formula 1] below.

$$[\text{Formula 1}]$$
$$0.6 \le \frac{(L_{1\text{-}3})f}{BFL} \le 1.6$$

Here, "$L_{1\text{-}3}$" may be the distance from the object-side surface of the lens disposed closest to the object side to the image-side surface of the lens disposed farthest from the object side, "f" may be the focal length of the camera module, and "BFL" may be the distance from the image-side surface of the lens disposed farthest from the object side to the imaging plane. Here, the "focal length of the camera module" may mean the effective focal length of the entire camera module.

According to an embodiment of the disclosure, an electronic device may include a camera module including a lens assembly and an image sensor arranged to receive light focused or guided by the lens assembly, and a processor configured to obtain an image of an object by using the camera module. According to an embodiment, the lens assembly may include at least three lenses arranged along the optical axis direction oriented to an image side from an object side and, among the at least three lenses, a first lens disposed closest to the object side has a positive refractive power, and the object-side surface of the first lens may be concave. According to an embodiment, the lens assembly may satisfy [Formula 1] below.

$$[\text{Formula 1}]$$
$$0.6 \leq \frac{(L_{1\text{-}3})f}{BFL} \leq 1.6$$

Here, "$L_{1\text{-}3}$" may be the distance from the object-side surface of the lens disposed closest to the object side to the image-side surface of the lens disposed farthest from the object side, "f" may be the focal length of the camera module, and "BFL" may be the distance from the image-side surface of the lens disposed farthest from the object side to the imaging plane.

[Brief Description of Drawings]

The above and other aspects, features, and/or advantages of an embodiment of the disclosure will be more apparent from the following detailed description taken with reference to the accompanying drawings.

FIG. 1 is a block diagram illustrating an electronic device in a network environment according to an embodiment of the disclosure.

FIG. 2 is a perspective view illustrating an internal configuration of a wearable electronic device according to an embodiment of the disclosure.

FIG. 3 is a view illustrating a front surface of a wearable electronic device according to an embodiment of the disclosure.

FIG. 4 is a view illustrating a rear surface of a wearable electronic device according to an embodiment of the disclosure.

FIG. 5 is an exploded perspective view of a camera module according to an embodiment of the disclosure.

FIG. 6 is a view illustrating a camera module according to an embodiment of the disclosure.

FIG. 7 is a graph depicting a spherical aberration of a camera module according to the embodiment of FIG. 6.

FIG. 8 is a graph depicting an astigmatism of a camera module according to the embodiment of FIG. 6.

FIG. 9 is a graph depicting a distortion of a camera module according to the embodiment of FIG. 6.

FIG. 10 is a view illustrating a camera module according to an embodiment of the disclosure.

FIG. 11 is a graph depicting a spherical aberration of a camera module according to the embodiment of FIG. 10.

FIG. 12 is a graph depicting an astigmatism of a camera module according to the embodiment of FIG. 10.

FIG. 13 is a graph depicting a distortion of a camera module according to the embodiment of FIG. 10.

FIG. 14 is a view illustrating a camera module according to an embodiment of the disclosure.

FIG. 15 is a graph depicting a spherical aberration of a camera module according to the embodiment of FIG. 14.

FIG. 16 is a graph depicting an astigmatism of a camera module according to the embodiment of FIG. 14.

FIG. 17 is a graph depicting a distortion of a camera module according to the embodiment of FIG. 14.

FIG. 18 is a view illustrating a camera module according to an embodiment of the disclosure.

FIG. 19 is a graph depicting a spherical aberration of a camera module according to the embodiment of FIG. 18.

FIG. 20 is a graph depicting an astigmatism of a camera module according to the embodiment of FIG. 18.

FIG. 21 is a graph depicting a distortion of a camera module according to the embodiment of FIG. 18.

FIG. 22 is a view illustrating a camera module according to an embodiment of the disclosure.

FIG. 23 is a graph depicting a spherical aberration of a camera module according to the embodiment of FIG. 22.

FIG. 24 is a graph depicting an astigmatism of a camera module according to the embodiment of FIG. 22.

FIG. 25 is a graph depicting a distortion of a camera module according to the embodiment of FIG. 22.

FIG. 26 is a view illustrating a camera module according to an embodiment of the disclosure.

FIG. 27 is a graph depicting a spherical aberration of a camera module according to the embodiment of FIG. 26.

FIG. 28 is a graph depicting an astigmatism of a camera module according to the embodiment of FIG. 26.

FIG. 29 is a graph depicting a distortion of a camera module according to the embodiment of FIG. 26.

Throughout the accompanying drawings, like reference numerals may be assigned to like components, configurations, and/or structures.

[Mode for Carrying out the Invention]

Wearable electronic devices such as AR and VR devices may be equipped with at least one camera. For example, the at least one camera may be a camera for tracking the gaze of a user or an object, and may include, for example, a gaze tracking camera. In order to dispose a camera in a wearable electronic device with a narrow component placement space, the camera is required to have an ultra-small size. Meanwhile, the camera may further include a filter depending on the purpose, or may further include a cover glass for protecting an image sensor. For example, the camera may further include a filter and a cover glass. However, it may be difficult to miniaturize a camera including such components while maximizing optical performance and placing the camera in a wearable electronic device with a narrow component placement space.
Various embodiments of the disclosure may provide a camera module configured to be compact for placement in a wearable electronic device having a narrow component placement space while having optimal optical performance and an electronic device including same.
Hereinafter, various embodiments of the disclosure will be described with reference to the accompanying drawings.
An electronic device according to various embodiments of the disclosure may include, for example, at least one of, for example, a smartphone, a tablet personal computer (PC), a mobile phone, a video phone, an electronic book reader, a desktop PC, a laptop PC, a netbook computer, a workstation, a server, a personal digital assistant (PDA), a portable multimedia player (PMP), a MP3 player, a medical device, a camera, or a wearable device. The wearable device may include at least one of an accessory type (e.g., watch, ring, bracelet, anklet, necklace, glasses, contact lens, or head-mounted device (HMD)), a fabric or clothing-integrated type (e.g., electronic clothing), a body-mounted type (e.g., skin pad, or tattoo), and a bio-implantable circuit. In an embodiment, the electronic device may include, for example, at least one of a television, a digital video disk (DVD) player, an audio, a refrigerator, an air conditioner, a cleaner, an oven, a microwave oven, a washing machine, an air purifier, a set-top box, a home automation control panel, a security control panel, a media box (e.g., Samsung HomeSync™, Apple TV™, or Google TV™), a game console (e.g., Xbox™ or PlayStation™), an electronic dictionary, an electronic key, a camcorder, or an electronic picture frame. In various embodiments, the electronic device may be flexible, or may be a combination of one or more of the aforementioned various devices. The electronic device according to embodiments of the disclosure is not limited to those described above. In various embodiments of the disclosure, the term "user" may refer to a person using an electronic device or a device (e.g., artificial intelligence electronic device) using an electronic device. The electronic device according to embodiments of the disclosure is not limited to those described above.

According to various embodiments, a typical example of the electronic device may include an optical device (e.g., camera module), and the following description may be based on an embodiment in which a lens assembly is mounted in the optical device.

In describing various embodiments of the disclosure, some numerical values may be presented, but it should be noted that these numerical values do not limit various embodiments of the disclosure unless set forth in the claims.

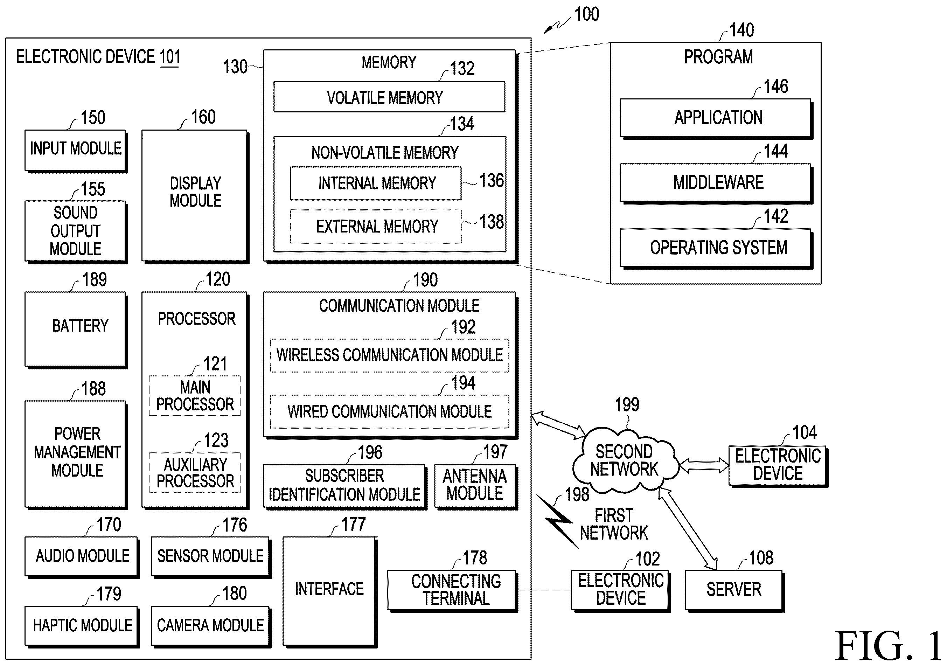

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

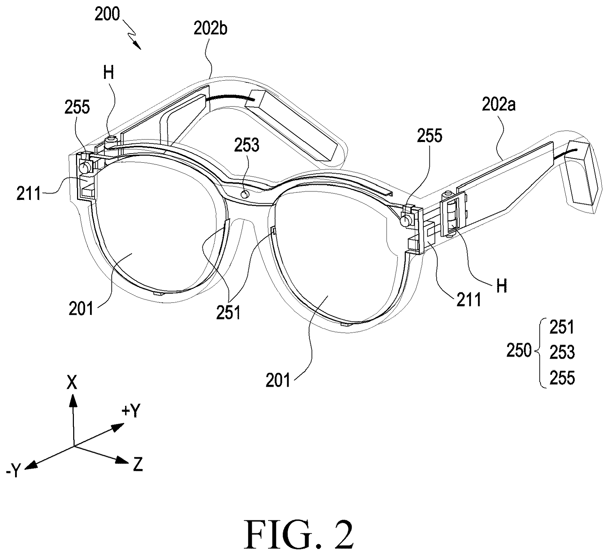

FIG. 2 is a perspective view illustrating an internal configuration of a wearable electronic device 200 according to an embodiment of the disclosure.

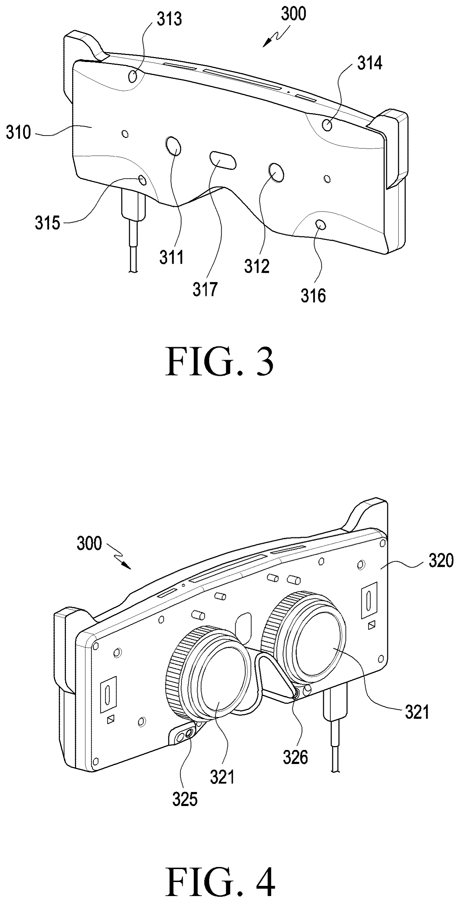

According to an embodiment of the disclosure, the wearable electronic device 200 in FIG. 2 (or the wearable electronic device 300 in FIG. 3 described below) may be substantially the same as the electronic device 101 in FIG. 1 and may be implemented to be wearable on a user's body. In an embodiment, each of the external electronic devices 102 and 104 in FIG. 1 may be the same or a different type of device as the electronic device 101 or the wearable electronic device 200 or 300. According to an embodiment, all or some of operations executed in the electronic device 101 or the wearable electronic device 200 or 300 may be executed in one or more of the external electronic devices 102, 104, or 108. For example, in case that the electronic device 101 or the wearable electronic device 200 or 300 is required to perform a certain function or service automatically or in response to a request from a user or another device, the electronic device 101 or the wearable electronic device 200 or 300 may, instead of or in addition to executing the function or service by itself, request one or more external electronic devices to execute at least a part of the function or service. The one or more external electronic devices having received the request may execute at least a part of the requested function or service, or an additional function or service related to the request, and transmit a result of the execution to the electronic device 101 or the wearable electronic device 200 or 300. The electronic device 101 or the wearable electronic device 200 or 300 may process the result as is or additionally and provide same as at least a part of a response to the request. For example, an external electronic device 102 may render content data executed in an application and transmit same to the electronic device 101 or the wearable electronic device 200 or 300, and the electronic device 101 or the wearable electronic device 200 or 300 having received the data may output the content data to a display module (e.g., the display module 160 or the light output module 211 in FIG. 1). When the electronic device 101 or the wearable electronic device 200 or 300 detects a user's movement through an inertial measurement unit sensor or the like, a processor (e.g., the processor 120 in FIG. 1) of the electronic device 101 or the wearable electronic device 200 or 300 may correct the rendering data received from the external electronic device 102 based on the movement information and output same to the display module. Alternatively, the movement information may be transmitted to the external electronic device 102 to request rendering so that screen data is updated accordingly. According to various embodiments, the external electronic device 102 may be a device of various forms, such as a case device capable of storing and charging the electronic device 101.

Referring to FIG. 2, the wearable electronic device 200 according to an embodiment of the disclosure may include at least one of a light output module 211, a display member 201, and a camera module 250.

According to an embodiment of the disclosure, the light output module 211 may include a light source capable of outputting an image and a lens configured to guide the image to the display member 201. According to an embodiment of the disclosure, the light output module 211 may include at least one of a liquid crystal display (LCD), a digital mirror device (DMD), a liquid crystal on silicon (LCoS), a light emitting diode (LED) on silicon (LEDoS), an organic light emitting diode (OLED), or a micro light emitting diode (micro LED).

According to an embodiment of the disclosure, the display member 201 may include a light waveguide. According to an embodiment of the disclosure, an output image of the light output module 211 incident on one end of the optical waveguide may be propagated within the optical waveguide and provided to a user. According to an embodiment, the display member 201 may include at least one of a diffractive optical element (DOE), a holographic optical element (HOE), or a reflective element (e.g., a reflective mirror) provided in the light waveguide. For example, the display member 201 may guide an output image of the light output module 211 to a user's eyes by including at least one of a diffractive optical element, a holographic optical element, or a reflective element, and/or by including an optical waveguide.

According to an embodiment of the disclosure, the camera module 250 may capture a still image and/or video. According to an embodiment, the camera module 250 may be disposed within the lens frame and around the display member 201.

According to an embodiment of the disclosure, a first camera module 251 may capture and/or recognize the user's eye (e.g., a pupil or an iris) or a trajectory of a gaze. According to an embodiment of the disclosure, the first camera module 251 may periodically or aperiodically transmit information (e.g., trajectory information) on tracking of the user's eye and the trajectory of a gaze to the processor (e.g., the processor 120 in FIG. 1).

According to an embodiment of the disclosure, a second camera module 253 may capture an image of the outside. When capturing an image of the outside, the second camera module 253 may capture an image substantially in the direction toward which the user's gaze is directed.

According to an embodiment of the disclosure, a third camera module 255 may be used for hand detection and tracking and recognition of a user gesture (e.g., a hand gesture). The third camera module 255 according to an embodiment of the disclosure may be used for head tracking of 3 degrees of freedom (3DoF) and 6DoF, and location (space, environment) recognition and/or movement recognition. The second camera module 253 may be used for hand detection and tracking and user gesture recognition according to an embodiment of the disclosure. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

According to an embodiment, the wearable electronic device 200 may have at least one of the above components omitted, or one or more other components added. For example, the wearable electronic device 200 may further include an input module 260 (e.g., a microphone) or a battery 270.

According to an embodiment, the wearable electronic device 200 may include a pair of display members 201 arranged in parallel on one side of each other. For example, the user may wear the wearable electronic device 200 on his or her face, and the display members 201 may be arranged to correspond to one of the user's eyes while the wearable electronic device 200 is worn on the user's face. In an embodiment, when including a pair of display members 201, the wearable electronic device 200 may provide visual information to the user through any one of the display members 201 and/or through each of the display members 201.

According to an embodiment, the wearable electronic device 200 may include at least one wearing member 202a or 202b extending from the display member(s) 201 or rotatably coupled to the display member 201. In the described embodiment, the wearing member 202a or 202b may be exemplified as a structure that is rotatably coupled (or connected) to the display member 201 by a hinge structure H. For example, the wearing member 202a or 202b may be in a position where the wearing member 202a or 202b overlaps or folds with the display member 201, in which case the user may easily carry or store the wearable electronic device 200. In an embodiment, the wearable electronic device 200 may be easily worn on the face by the user at a position where the wearing member 202a or 202b is rotated by a specified angle (e.g., about 90 degrees) from a position overlapping the display member 201. For example, the wearable electronic device 200 may be stably worn by the user when the display member 201 is supported on the user's face and the wearing member 202a or 202b is supported on a side of the user's head (e.g., the ear).

FIG. 3 is a view illustrating a front surface of a wearable electronic device according to an embodiment of the disclosure. FIG. 4 is a view illustrating a rear surface of a wearable electronic device according to an embodiment of the disclosure.

Referring to FIGS. 3 and 4, in an embodiment, a depth sensor 317 and/or camera modules 311, 312, 313, 314, 315, and 316 configured to obtain information related to a peripheral environment of the wearable electronic device 300 may be arranged on a first surface 310 of a housing.

In an embodiment, the camera modules 311 and 312 may obtain an image related to a peripheral environment of the wearable electronic device.

In an embodiment, the camera modules 313, 314, 315, and 316 may obtain an image in a state where the wearable electronic device is worn by the user. The camera modules 313, 314, 315, and 316 may be used for hand detection and tracking and recognition of a user gesture (e.g., a hand gesture). The camera modules 313, 314, 315, and 316 may be used for head tracking in 3DoF and 6DoF, location (space, environment) recognition, and/or movement recognition. In an embodiment, the camera modules 311 and 312 may be used for hand detection and tracking and user gesture recognition.

In an embodiment, the depth sensor 317 may be configured to transmit a signal and receive a signal reflected from an object and may be used to identify a distance to an object, such as time of flight (TOF). Additionally, or in place of the depth sensor 317, the camera modules 313, 314, 315, and 316 may identify a distance to an object.

According to an embodiment, a face recognition camera module 325 or 326 and/or a display 321 (and/or a lens) may be arranged on a second surface 320 of the housing.

In an embodiment, the face recognition camera module 325 or 326 adjacent to the display 321 (and/or the lens) may be used to recognize and/or track the user's both eyes or may recognize and/or track both eyes of the user.

In an embodiment, the display 321 (and/or the lens) may be disposed on the second surface 320 of the wearable electronic device 300. In an embodiment, the wearable electronic device 300 may not include the camera modules 315 and 316 among multiple camera modules 313, 314, 315, and 316. Although not shown in FIGS. 3 and 4, the wearable electronic device 300 may further include at least one of components shown in FIG. 2.

As described above, the wearable electronic device 300 according to an embodiment may have a form factor to be mounted on the user's head. The wearable electronic device 300 may further include a strap and/or wearing member (e.g., the wearing member 202a or 202b in FIG. 2) for securing the wearable electronic device onto a user's body part. The wearable electronic device 300 may provide a user experience based on augmented reality, virtual reality, and/or mixed reality in a state of being mounted on the user head.

In examining the embodiments below, the electronic devices 101, 102, or 104, the wearable electronic devices 200 or 300 and/or the camera modules 180, 250, 311, 312, 313, 314, 315, 316, 325, and 326 of the embodiments described above may be referred to. The camera modules 400, 500, 600, 700, 800, 900, and 1000 of the embodiments described below may implement at least a part or the whole of one of the camera modules 180, 250, 311, 312, 313, 314, 315, 316, 325, and 326 described above. The display 321 in FIG. 4 may include a lens assembly of the embodiment described below, in which case the image sensor of the embodiment described below may be understood as the user's eye. For example, the display 321 in FIG. 4 may include a lens(es) to focus or guide visual information to the user's eye.

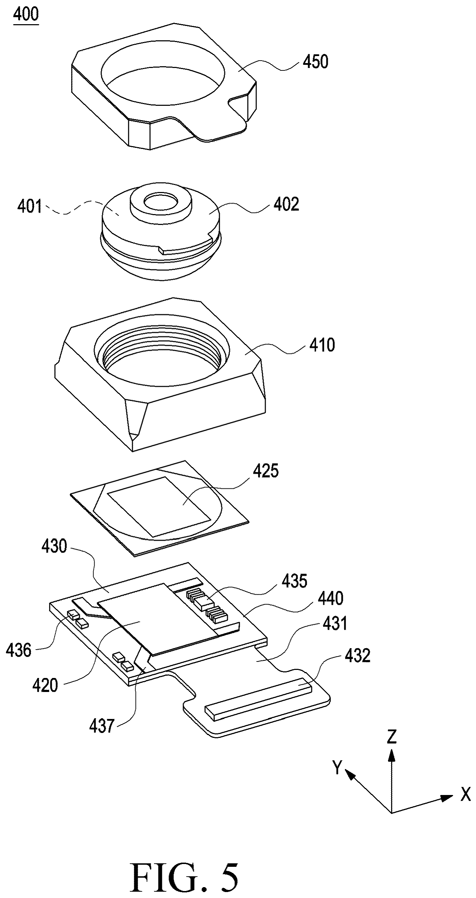

FIG. 5 is an exploded perspective view of a camera module 400 according to an embodiment of the disclosure.

In the detailed description of the embodiments described above and FIG. 5 and following, the longitudinal direction of the electronic device 101, 102, or 104, the wearable electronic device 200 or 300, and/or the camera module 400 may be defined as the "Y-axis direction", the width direction as the "X-axis direction", and/or the height direction (thickness direction) as the "Z-axis direction". In the detailed description below, referring to the longitudinal direction, the width direction, and/or the height direction (or thickness direction) may indicate the longitudinal direction, the width direction, and/or the height direction (or thickness direction) of the electronic device 101, 102, 104, 200, or 300, and/or the camera module 400. In some embodiments, with respect to the direction in which the component is directed, "negative/positive (-/+)" may be mentioned together with the orthogonal coordinate system illustrated in the drawings. For example, the front of the camera module 400 may be defined as a "surface facing the +Z-axis direction", and the rear may be defined as a "surface facing the -Z-axis direction". According to an embodiment, the arrangement relationship in the height direction of a component or another component, that is, the criteria for up/down, may follow the +Z-axis direction/-Z-axis direction. That is, when a component is arranged above another component, it may mean that the component is arranged in the +Z-axis direction with respect to the other component, and when a component is arranged below another component, it may mean that the component is arranged in the -Z-axis direction with respect to the other component. Meanwhile, it should be noted that even if a component is arranged above or below another component, it does not mean that the entire component is located above or below the entire components of the other component. For example, a part of a component may be arranged above a part of another component, but another part of the component may be arranged below another part of the other component. In the following description, when it is described that a component overlaps (or is stacked on) another component, it should be noted that the description of the arrangement relationship in the height direction described above may be applied. According to an embodiment, in describing the components below, referring to a component as viewed from "above" or from the "top" may refer to a component viewed from the +Z-axis direction, and referring to a component as viewed from "below" or from the "back" may refer to a component viewed from the -Z-axis direction. In describing a direction, if "negative/positive (-/+)" is not described, it may be interpreted as facing the + direction unless otherwise defined. For example, the "Z-axis direction" may be interpreted as facing the +Z direction, the "X-axis direction" may be interpreted as facing the +X-axis direction, and the "Y-axis direction" may be interpreted as facing the +Y-axis direction. In describing the direction, referring to facing one of the three axes of the orthogonal coordinate system may include facing in a direction parallel to the axis. This is based on the orthogonal coordinate system described in the drawings for the sake of simplicity of description, and it should be noted that the description of such directions or components does not limit the various embodiments of the disclosure.

The camera module 400 may include at least one lens 401, a lens barrel 402 surrounding the at least one lens 401, a lens holder 410 for fixing the lens barrel 402, an image sensor 420, and a printed circuit board 430 on which the image sensor 420 is disposed.

The at least one lens 401 may be configured to focus and/or guide light (e.g., image information about an object) incident on the at least one lens 401. The light may be refracted while passing through the at least one lens 401. According to an embodiment, the at least one lens 401 may include at least three lenses to configure a lens assembly (LA) for aberration control. According to an embodiment, the at least one lens 401 may be made of a glass material and/or a synthetic resin material.

The lens barrel 402 may generally have a cylindrical shape, and have an opening provided on the upper surface through which light enters. A lens accommodated in the lens barrel 402 may be exposed through the opening to refract light entering from the outside and form an image on an image formation surface img of an image sensor 420. The size of the image sensor 420 on which an image is formed may be large compared to the small diameter of the opening through which light enters the lens barrel 402, and accordingly, the outer diameters of the multiple lenses may generally have a shape that becomes longer or larger from the object side toward the image side. The lens barrel 402 may also have a shape corresponding to the shape of a lens assembly assembled therein.

The lens holder 410 may be configured to surround the lens barrel 402. The lens holder 410 may include a fastening structure that may be fastened to the lens barrel 402, and the lens barrel 402 may have a structure corresponding thereto so as to be coupled to the fastening structure disposed in the lens holder 410. According to an embodiment, the fastening structure included in the lens holder 410 may correspond to a screw thread. According to an embodiment, the lens holder 410 is a configuration that is coupled to the lens barrel 402 to define the overall appearance of the camera module, and may have a shape of approximately a hexahedron. However, the disclosure is not limited thereto, and may have a structure of a cylinder, a triangular prism, or a pentagon or larger prism. It should be noted that the lens holder 410 is not limited to a specific shape. During use of the camera module 400, the relative position between the lens holder 410 and the lens barrel 402 may be maintained to be fixed.

The image sensor 420 is a sensor that is arranged on the printed circuit board 430 in a state aligned with an optical axis along the at least one lens 401, and may react to light. For example, the image sensor 420 may include a sensor such as a complementary metal-oxide semiconductor (CMOS) image sensor or a charge coupled device (CCD). The image sensor 420 is not limited thereto, and may include, for example, various elements for converting an object image into an electric image signal. The image sensor 420 may detect brightness information, gradation information, color information, and the like of the object from light passing through at least one lens, and obtain an image of the object.

The printed circuit board 430 may have a flat shape as a configuration in which the image sensor 420 is arranged on one surface. The printed circuit board 430 may include at least one component 435 or 436 in addition to the image sensor 420. For example, the printed circuit board 430 may include an image signal processor (ISP), memory 435 (e.g., EEPROM), and/or a capacitor 436 (e.g., a multilayer ceramic capacitor (MLCC)). According to an embodiment, the printed circuit board 430 may additionally include a reinforcing member 437 to prevent tilting of the image sensor 420.

According to an embodiment, the camera module 400 may further include a filter 425. The filter 425 may include, for example, an IR cut filter for blocking infrared (IR) rays or a band pass filter for transmitting only a specific band of infrared rays. The filter 425 may be arranged to overlap the image sensor 420.

According to an embodiment, the camera module 400 may further include cover glass 440. The cover glass 440 is configured to cover the image sensor 420 and may be disposed between the filter 425 and the image sensor 420.

According to an embodiment, the camera module 400 may be a camera module to which a chip scale package (CSP) method is applied as a technology for packaging the image sensor 420. The CSP method may be a method of primarily packaging a chip and connecting the printed circuit board 430 and the image sensor 420 without a wire bonding process. Compared to a chip-on-board (COB) method as an image sensor packaging technology, the CSP method may have a relatively low possibility of being exposed to external contamination during the manufacturing process. In addition, since the CSP method may be performed in a wafer-level manufacturing process, unlike the COB method that must go through a chip-level manufacturing process, the CSP method may have higher productivity than the COB method. Considering these advantages, the electronic device of the disclosure may include a camera module to which the CSP method is applied. According to the CSP method, the at least one lens 401, the lens barrel 402, and the lens holder 410 may be assembled in a state in which the image sensor 420, the filter, and/or the cover glass are packaged together. According to an embodiment, the printed circuit board 430 may be connected to other components (e.g., the processor 120 in FIG. 1) within the wearable electronic device 300 using a flexible printed circuit board 431. According to an embodiment, a connector 432 may be provided at an end of the flexible printed circuit board 431 to be electrically connected to other components and/or other printed circuit boards within the wearable electronic device 300.

According to an embodiment, the camera module 400 may further include a lens cover member 450. For example, the lens cover member 450 may correspond to a cover tape. According to an embodiment, the lens cover member 450 may be used to make the appearance of the camera module 400 more attractive, or the lens cover member 450 may be used to prevent the camera module 400 from moving within the electronic device.

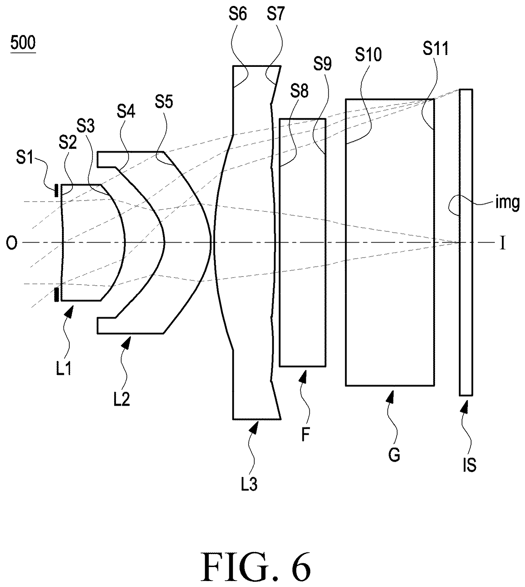

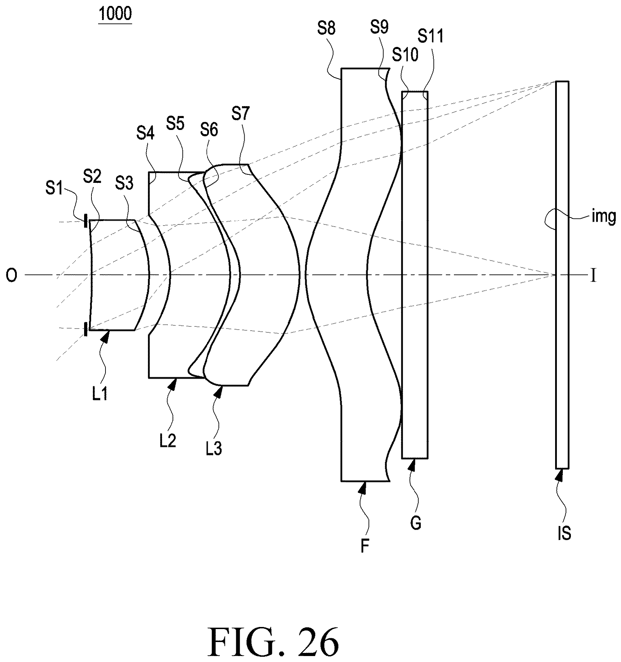

Hereinafter, with reference to FIGS. 6 to 29, implementation examples of the camera module 400 and/or lens assembly described above will be described. The electronic device 101, 102, 104, 200, or 300 of the disclosure may include the camera module 400 including at least three lenses. For example, as an example of the camera module 400 including at least three lenses, the embodiments of FIGS. 6 to 25 may provide a camera module 500, 600, 700, 800, or 900 including three lenses, and the embodiments of FIGS. 26 to 29 may provide a camera module 1000 including four lenses.

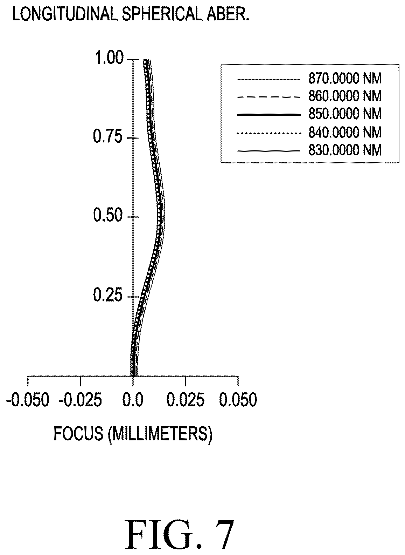

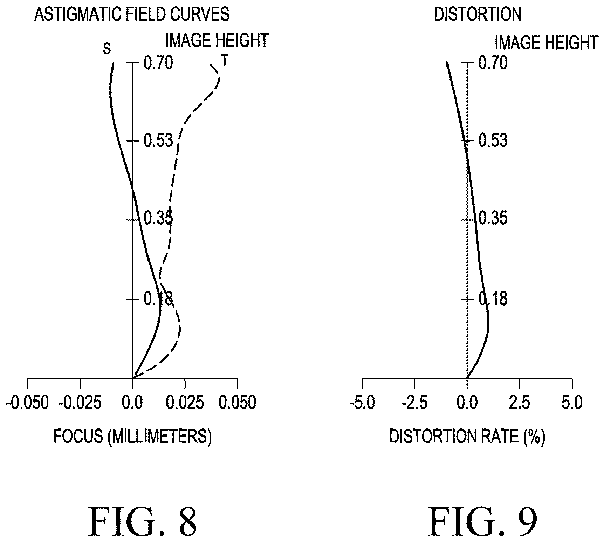

FIG. 6 is a view illustrating a camera module according to an embodiment of the disclosure. FIG. 7 is a graph depicting a spherical aberration of a camera module according to the embodiment of FIG. 6. FIG. 8 is a graph depicting an astigmatism of a camera module according to the embodiment of FIG. 6. FIG. 9 is a graph depicting a distortion of a camera module according to the embodiment of FIG. 6.

The camera module 500 may include three lenses (e.g., L1, L2, and L3) and an image sensor IS. In the embodiment of FIG. 6, the camera module 500 may further include a filter F and cover glass G. Here, the filter F may correspond to a band pass filter. For example, the filter may be a filter that passes light having a band of about 850.0000 nm, and the camera module 500 including same may be placed near the user's eye in the wearable electronic device and used as a camera for eye tracking.

The three lenses (e.g., L1, L2, and L3) may configure a lens assembly. Here, the lens assembly may be understood to include, for example, three lenses (e.g., L1, L2, and L3) and a lens holder (e.g., the lens holder 410 in FIG. 5) that fixes or supports the three lenses (e.g., L1, L2, and L3).

The camera module 500 including three lenses (e.g., L1, L2, and L3) may have an angle of view of about 70 degrees or more and about 90 degrees or less. For example, the angle of view of the camera module 500 may be about 80 degrees. In addition, the image sensor IS is an ultra-small image sensor arranged in the wearable electronic device and may have an image height (IMG HT) of about 0.7 mm. For reference, the image height may mean a half of the diagonal length of an image sensor which is formed in an approximately rectangular shape (e.g., a square) with the optical axis (O-I) as a normal line and has a thin thickness.

The three lenses (e.g., L1, L2, and L3) may be aligned on an optical axis (O-I) that extends from the object (or external object) side O to the image side I. The optical axis (O-I) may be substantially parallel to the directional component Z mentioned above in FIG. 5. In addition, the imaging plane img of the image sensor IS may be parallel to an imaginary plane formed by the directional component X and the directional component Y. In a description for illustrating configuration of each lens below, for example, an object side may indicate a direction in which an object obj is located and an image side may indicate a direction in which an imaging plane img on which an image is formed is located. In addition, "a surface facing an object side" may indicate a surface of the object obj side with reference to the optical axis O-I and a left side surface (or a front surface) of a lens in the drawings according to various embodiments of the disclosure, "a surface facing an image side" may indicate a surface of an imaging plane img with reference to the optical axis O-I and a right side surface (or a rear surface) of a lens in the drawings. The imaging plane img may be a portion in which a photographing element or the image sensor IS is disposed to form an image.

Based on at least one lens of the multiple lenses included in the camera module 500, facing the object side O along the optical axis O-I may be defined as facing a first direction and facing the image side I along the optical axis O-I may be defined as facing a second direction. When it is described that a lens (e.g., a first lens L1) includes a surface facing the object side O, the surface facing the object side O may be said to face the first direction. According to various embodiments, when it is described that a lens (e.g., a first lens L1) includes a surface facing the image side I, the surface facing the image side I may be said to face the second direction. The first direction and the second direction may be parallel to the direction component Z of FIG. 5.

In a description for illustrating the three lenses (e.g., L1, L2, and L3), in each lens, a side close to the optical axis O-I may be referred to as a "chief portion" and a side far from the optical axis O-I (or a peripheral portion of a lens) may be referred to as a "marginal portion". The chief portion may be, for example, a portion intersecting the optical axis O-I in the first lens L1. The marginal portion may be, for example, a portion spaced a predetermined distance apart from the optical axis O-I in the first lens L1. The marginal portion may include, for example, an end portion of a lens farthest from the optical axis O-I in the first lens L1.

The first lens L1 included in the lens assembly 500 may have positive refractive power and the second lens L2 may have negative refractive power. The third lens L3 may have positive refractive power. In the above-described embodiments, when light parallel to the optical axis O-I is incident to a lens having positive refractive power, the light having penetrated the lens may be concentrated. For example, a lens having positive refractive power may be a lens based on a convex lens principle. In other hands, when parallel light is incident to a lens having negative refractive power, the light having penetrated the lens may be dispersed. For example, a lens having negative refractive power may be a lens based on a concave lens principle.

The first lens L1 may be configured as a small-diameter lens having a smaller effective diameter than the second lens L2 and the third lens L3. Furthermore, the second lens L2 may be configured as a small-diameter lens having a smaller effective diameter than the third lens L3. Here, the "effective diameter" may refer to a substantial area through which light passes, excluding a flange (rib), on one surface of the lens. The length of the effective diameter may refer to the distance between an end of one boundary of the substantial area through which light passes and an end of the other boundary in a direction perpendicular to the optical axis (O-I). Since the lenses in the wearable electronic device needs to be installed within a limited space, by implementing the first lens L1, the second lens L2, and the third lens L3 to have effective diameters sequentially increasing in the order, and configuring the first lens L1 as a lens having positive refractive power, the second lens L2 as a lens having negative refractive power, and the third lens L3 as a lens having positive refractive power, the overall length of the camera module 500 may be reduced. In addition, according to an embodiment, by arranging an aperture stop (sto) that determines the F-number (F-no) of the camera module 500 in front of the first lens L1 (e.g., on the object side O), the outer diameter of the lenses may be minimized.

Referring to FIG. 6, the first lens L1 may be formed as a meniscus lens in which a surface S2 facing the object side O is concave toward the object side O and a surface S3 facing the image side I is also concave toward the object side O (convex toward the image side I). The second lens L2 may also be formed as a meniscus lens in which a surface S4 facing the object side O is concave toward the object side O and a surface S5 facing the image side I is also concave toward the object side O (convex toward the image side I). The third lens L3 may also be formed as a biconvex lens in which a surface S6 facing the object side O is convex toward the object side O and a surface S7 facing the image side I is concave toward the object side O (convex toward the image side I).

At least one of the surfaces S2, S3, S4, S5, S6, and S7 of the first lens L1, the second lens L2, and the third lens L3 may be formed as an aspheric surface. As a result, spherical aberration may be prevented. In the various embodiments described below, it can be exemplified that the first lens L1, the second lens L2, and the third lens L3 are all implemented as aspherical surfaces.

All of a radius of curvature, a thickness, a total track length (TTL), a focal, and the like of a lens of the disclosure may have a unit of mm unless otherwise specified. A thickness of a lens, a distance between lenses, a TTL (or an overall length (OAL)) may be a length measured with reference to the optical axis of the lenses. In a description of a lens shape, the convex shape of one surface may mean that an optical axis portion of the corresponding surface is convex, and the concave shape of one surface may mean that an optical axis portion of the corresponding surface is concave. Even if one surface (an optical axis portion of the corresponding surface) of the lens is described to have a convex shape, a peripheral portion (a portion spaced a predetermined distance apart from the optical axis portion of the corresponding surface) may be concave. Similarly, even if one surface (an optical axis portion of the corresponding surface) of the lens is described to have a concave shape, a peripheral portion (a portion spaced a predetermined distance apart from the optical axis portion of the corresponding surface) may be convex. An inflection point in the specification and claims below may mean a point at which a radius of curvature is changed in a portion not intersecting the optical axis. The inflection point may be located at a point at which one surface of the lens is changed from a convex shape into a concave shape or one surface of the lens is changed from a concave shape into a convex shape.

The camera module 500 may include, in order from the object side, three lenses having positive, negative, and positive refractive power, one filter F (e.g., a band pass filter), and cover glass G. Here, the angle of view is about 80 degrees, and the image height is about 0.7 mm, so that the small camera module 500 may be implemented.

The camera module 500 may be implemented as lenses composed of synthetic resin (e.g., plastic) and each having a predetermined refractive index. Multiple lenses may be made of a synthetic resin material, so that the lenses may be reduced in size and weight, and may have a high degree of design freedom in terms of size and shape. For example, in terms of refractive index at a specific wavelength (e.g., 587.6000 nm, D-line) of visible light, the first lens L1 may be formed of a synthetic resin lens having a refractive index of 1.55 or less, and the second lens L2 may be formed of a synthetic resin lens having a refractive index of 1.66 or more. Through the design of the refractive indices, a lens assembly and/or an electronic device including the lens assembly may be reduced in size. According to an embodiment, in a lens formed of a synthetic resin (e.g., plastic), an Abbe's number may be prone to increase or decrease conversely as a refractive index decreases or increases.

In the case of three lenses (e.g., L1, L2, and L3) included in the camera module 500, the shorter an interval between one lens and another adjacent lens, the shorter the overall length of the camera module 500 (the overall length of the lens assembly in the optical axis direction). For example, when the camera module 500 and/or the electronic device according to various embodiments of the disclosure is desired to be manufactured in a small size, it is advantageous to maintain the overall length of the camera module 500 as short as possible.

The camera module 500 may include at least one aperture stop sto. By adjusting a size of the aperture stop, an amount of light reaching the imaging surface img of the image sensor IS may be adjusted. According to an embodiment, the aperture stop may be located between the first lens L1 and the object. According to various embodiments of the disclosure, by arranging the aperture stop sto that determines the F-number (F-no) of the camera module between the first lens L1 and the object, the effective diameter of the first lens L1 may be minimized while the angle of view is about 80 degrees, and the small camera module 500 may be implemented.

The camera module 500 may further include a filter F disposed between the third lens L3 and the image sensor IS. The filter F may block light, for example, infrared light, detected by a film or an image sensor of an optical device. The filter F may include, for example, a band pass filter or an IR cut filter. For example, when the filter F is mounted, a color of an image and the like detected and captured through the image sensor IS may be made close to a color that a person feels when he or she sees an actual object. In addition, the filter F may allow visible light to penetrate and infrared light to be emitted outside so as to prevent infrared light from transferring to the imaging surface img of the image sensor.

The camera module 500 may secure a sufficient back focal length (BFL) while configuring the small camera module 500 by satisfying [Formula 1] below.

$$[\text{Formula 1}]$$
$$0.6 \leq \frac{(L_{1\text{-}3})f}{BFL} \leq 1.6$$

Here, "$L_{1\text{-}3}$" may be a distance from the object-side O surface of the first lens L1 disposed closest to the object side to the image-side surface of the third lens L3 disposed farthest from the object side, "f" may be the focal length of the camera module, and "BFL" may be the distance from the image-side surface of the third lens L3 disposed farthest from the object side to the imaging plane img. If the value of [Formula 1] exceeds an upper limit, the BFL becomes short, making it difficult to apply an image sensor including a filter and/or cover glass (e.g., a CSP type image sensor), or the lens size may be excessively large, making it difficult to implement a small camera module. Even if the value falls below a lower limit, the BFL compared to the total length of the camera module may be excessively large, making it difficult to implement a small camera module.

Furthermore, the camera module 500 may satisfy [Formula 2] below.

$$[\text{Formula 2}]$$
$$0.6 \leq \frac{L_{1\text{-}3}}{IH} \leq 2.0$$

Here, "$L_{1\text{-}3}$" may be a distance from the object-side surface of the first lens arranged closest to the object side to the image-side surface of the third lens arranged farthest from the object side, and "IH" may be a maximum height of the imaging plane (e.g., image height). If the value of [Formula 2] exceeds an upper limit, the lens size may be excessively large compared to the image height of the image sensor, making it difficult to miniaturize the camera module, and if the value falls below the lower limit, the lens size may be reduced to a level that makes it impossible to manufacture the lens with a synthetic resin material.

Furthermore, the camera module 500 may satisfy [Formula 3] below.

$$[\text{Formula 3}]$$
$$0.6 \leq \frac{BFL}{f} \leq 1.2$$

Here, "BFL" may be a distance from the image side of the third lens arranged farthest from the object side to the image plane, and "f" may be the focal length of the camera module. If the value of [Formula 3] exceeds an upper limit, the BFL becomes excessively large compared to the focal length, making it difficult to correct astigmatism and miniaturizing the camera module may also be difficult. If the value falls below a lower limit, the BFL becomes small, and the mounting space of the image sensor including the filter and/or cover glass may be insufficient.

Furthermore, the camera module 500 may satisfy [Formula 4] below.

$$[\text{Formula 4}]$$

$$50 \leq Vd1 \leq 60$$

Here, "Vd1" may be the Abbe number of the first lens L1. If the Abbe number of the first lens exceeds an upper limit of the above formula 4, application to a synthetic resin material may be difficult, and if the value falls below a lower limit, chromatic aberration correction (in the case of a visible lens) may be difficult due to the low Abbe number. According to an embodiment, the Abbe number of the first lens L1 may be greater than the Abbe numbers of other lenses. According to an embodiment, in the camera module satisfying the above [Formula 1], astigmatism may occur, but since the first lens L1 has a meniscus shape in which both the object-side surface and the image-side surface are concave toward the object side O, astigmatism may be effectively corrected.

Furthermore, the camera module 500 may satisfy [Formula 5] below.

$$[\text{Formula 5}]$$

$$1.6 \leq nd2 \leq 1.75$$

Here, "nd2" may be the refractive index of the second lens. According to an embodiment, the refractive index of the second lens L2 may be the refractive index when light having a wavelength of about 850.0000 nm is incident on the camera module 500. According to an embodiment, the second lens L2 may have a meniscus shape in which both the object-side surface and the image-side surface are concave toward the object side. Since the second lens L2 has a meniscus shape, astigmatism may be effectively corrected. When the refractive index is below a lower limit of [Formula 5], a low refractive index of the second lens L2 may cause difficulty in reducing a size, and when the refractive exceeds an upper limit of [Formula 5], it may be difficult to employ a synthetic resin material which may cause increase in manufacturing costs, and make it difficult to reduce a weight of a product. By using the second lens L2 having a high refractive index, the angle of view of the camera module may be secured to be between about 70 degrees and about 90 degrees, while miniaturizing the camera module. By using the first lens L1 having a low refractive index and a high Abbe number, and the second lens L2 made of a material with a high refractive index and a low Abbe number, chromatic aberration may be effectively controlled.

According to various embodiments, the camera module 500 may include a flash, an image sensor IS, an image stabilizer, memory, or an image signal processor.

[Table 1] below may describe various data regarding three lenses (e.g., L1, L2, and L3) and components (e.g., the filter F and the cover glass G) included in the camera module 500. Here, "obj" may refer to an object, and "img" may refer to an imaging surface of the image sensor IS. Here, "S1" may refer to a position of an aperture stop sto. Furthermore, "S2 to S11" may refer to surfaces of three lenses (e.g., L1, L2, and L3), the filter (F), and the cover glass G. In addition, "y radius" may represent a radius of curvature of a lens, "Thickness" may represent a thickness or an air gap of a lens, "Nd" may represent a refractive index of a medium (e.g., a lens), and "Vd" may represent an Abbe's number of a lens. [Table 1] below may show data for the camera module 500 having a F-number of about 2.2, a half field of view (HFoV) of about 39.85 degrees, a focal length of about 0.839 mm, and an IMG HT of the image sensor IS of 0.704. The camera module 500 may include three lenses (e.g., L1, L2, and L3) and components (e.g., the filter F and the cover glass G) having the data of [Table 1], and may satisfy the above-described formula (and/or at least one of the above-described formulas).

[Table 1]

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| obj | Sphere | Infinity | 25.000 | | | |
| S1 | Sphere | Infinity | 0.010 | | | |
| S2 | Asphere | -24.347 | 0.279 | 1.535002 | 55.7526 | 0.747 |
| S3 | Asphere | -0.389 | 0.192 | | | |

(continued)

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| S4 | Asphere | -0.179 | 0.205 | 1.67074 | 19.2299 | -1.291 |
| S5 | Asphere | -0.330 | 0.020 | | | |
| S6 | Asphere | 0.963 | 0.283 | 1.67074 | 19.2299 | 1.172 |
| S7 | Asphere | -3.126 | 0.020 | | | |
| S8 | Sphere | Infinity | 0.210 | 1.516798 | 64.1983 | |
| S9 | Sphere | Infinity | 0.100 | | | |
| S10 | Sphere | Infinity | 0.400 | 1.516798 | 64.1983 | |
| S11 | Sphere | Infinity | 0.126 | | | |
| img | Sphere | Infinity | 0.000 | | | |

The refractive index data of the above [Table 1] may represent the refractive index at a wavelength of, for example, 850.0000 nm. A camera module according to various embodiments described in [Table 3], [Table 5], [Table 7], [Table 9], and [Table 11] below in addition to [Table 1] above may be applied to the disclosure. [Table 2] below shows aspherical coefficients of the three lenses (e.g., L1, L2, and L3) included in the camera module 500, and the aspherical coefficients may be calculated through [Equation 6] below.

[Formula 6]

$$x = \frac{(\frac{y^2}{R})}{1+\sqrt{(1-(1+K)(\frac{y}{R})^2}} + \sum_i (A_i)(y^i)$$

Here, "x" may represent a distance (sag) from an apex of a lens in an optical axis O-I direction, "R" may represent a radius of curvature, "y" may represent represent a distance in a direction perpendicular to the optical axis, "K" may represent a Conic constant, and "$A_i$" may represent an aspherical coefficient.

[Table 2]

| Lens surface (surface) | S2 | S3 | S4 | S5 | S6 | S7 |
|---|---|---|---|---|---|---|
| k | 9.9000E+01 | 6.5096E-01 | -7.4043E-01 | -6.9843E-01 | -8.5573E+01 | -7.1144E+01 |
| $A_4$ | -2.2032E+00 | -2.5041E-01 | 1.0131E+01 | 1.4328E+00 | 6.0227E+00 | -1.6915E+00 |
| $A_6$ | -3.3220E+02 | 1.6353E+02 | 5.5346E+02 | 1.3033E+02 | -9.5268E+01 | 3.0145E+01 |
| $A_8$ | 3.3644E+04 | -7.2684E+03 | -2.3727E+04 | -2.5658E+03 | 1.1570E+03 | -2.2557E+02 |
| $A_{10}$ | -1.9988E+06 | 1.8646E+05 | 5.2378E+05 | 2.2976E+04 | -1.0445E+04 | 1.2650E+03 |
| $A_{12}$ | 6.6457E+07 | -2.3960E+06 | -6.4128E+06 | -1.0389E+05 | 6.7108E+04 | -5.3001E+03 |
| $A_{14}$ | -1.2464E+09 | 1.2585E+07 | 4.1204E+07 | 1.9086E+05 | -2.9541E+05 | 1.4265E+04 |
| $A_{16}$ | 1.2208E+10 | 0.0000E+00 | -1.0459E+08 | 0.0000E+00 | 8.3607E+05 | -2.2415E+04 |
| $A_{18}$ | -4.7969E+10 | 0.0000E+00 | 0.0000E+00 | 0.0000E+00 | -1.3630E+06 | 1.8622E+04 |
| $A_{20}$ | 0.0000E+00 | 0.0000E+00 | 0.0000E+00 | 0.0000E+00 | 9.7219E+05 | -6.3129E+03 |

FIG. 7 is a graph depicting a spherical aberration of a camera module 500 according to the embodiment of FIG. 6. The spherical aberration may be a phenomenon in which focusing positions of lights passing through different portions (e.g., the chief portion and the marginal portion) of a lens change. In FIG. 7, the horizontal axis represents a degree of a longitudinal spherical aberration, and the vertical axis represents a normalized distance from the center of an optical axis, thus showing changes of longitudinal spherical aberrations according to a wavelength of light. The longitudinal spherical aberrations may be represented for lights having wavelengths of, for example, about 870.0000 nm, about 860.0000 nm, about 850.0000 nm, about 840.0000 nm, or about 830.0000 nm, respectively. Referring to FIG. 7, the longitudinal spherical aberration of the lens assembly according to various embodiments of the disclosure in the visible light band is limited within +0.025 to -0.025 to show a stable optical characteristic. FIG. 8 is a graph depicting an astigmatism of a camera module 500 according to the embodiment of FIG. 6. The astigmatism may represent that a focus of light passing through the vertical direction and the horizontal direction is out of focus when a tangential plane (or meridional plane) and a sagittal plane of a lens have different radii.

In FIG. 8, the astigmatism of the camera module 500 is a result obtained at a wavelength of 850.0000 nm, the dotted line represents an astigmatism T in a tangential direction (e.g., a tangential plane curvature), and the solid line represents an astigmatism S in a sagittal direction (e.g., a sagittal plane curvature). As identified through FIG. 8, it may be identified that the astigmatism according to various embodiments of the disclosure is generally limited within +0.050 to -0.050, and shows stable optical characteristics.

FIG. 9 is a graph depicting a distortion of a camera module 500 according to the embodiment of FIG. 6. The distortion may be caused because an optical power changes according to a distance from the optical axis O-I and may represent that an image formed on an actual imaging plane (e.g., the imaging plane in FIG. 6) may appear large or small compared to an image formed on a theoretical imaging plane.

In FIG. 9, the distortion of the camera module 500 is a result obtained at a wavelength of about 850.0000 nm, and an image captured through the camera module 500 may have some distortion occurring at a point that deviates from the optical axis O-I. However, such distortion is at a level that may generally appear in a camera module including a lens. According to an embodiment of the disclosure, the distortion of the camera module 500 has a distortion rate of less than about 2.5%, and may provide good optical characteristics.

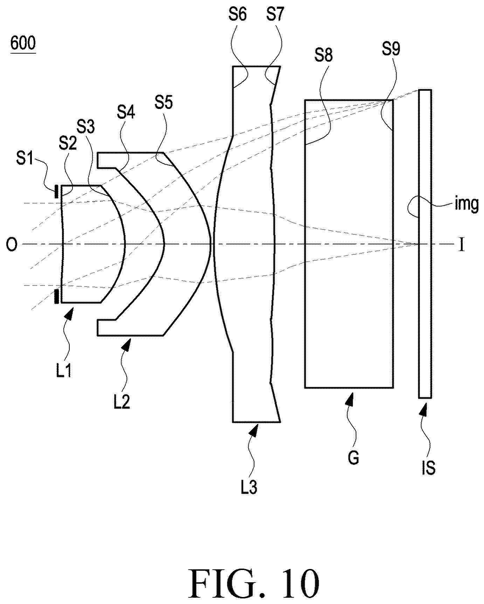

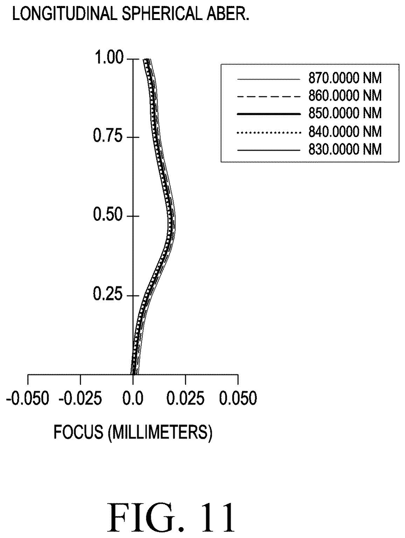

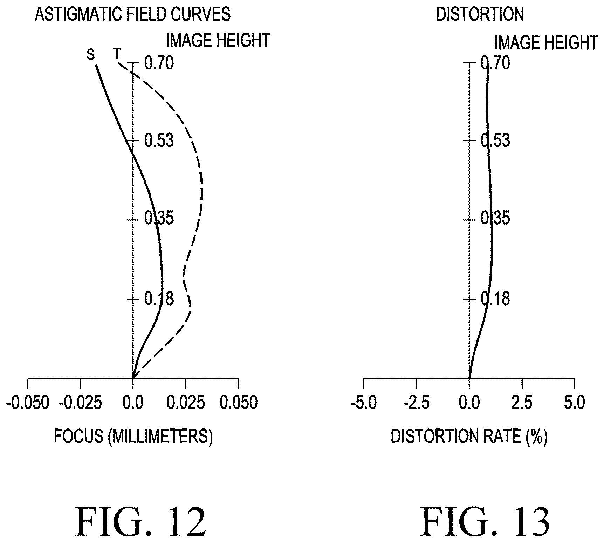

FIG. 10 is a view illustrating a camera module according to an embodiment of the disclosure. FIG. 11 is a graph depicting a spherical aberration of a camera module according to the embodiment of FIG. 10. FIG. 12 is a graph depicting an astigmatism of a camera module according to the embodiment of FIG. 10. FIG. 13 is a graph depicting a distortion of a camera module according to the embodiment of FIG. 10.

The description of the camera module 500 with reference to the above-described embodiments in FIGS. 6 to 9 may be applied to camera modules 600, 700, 800, 900, and 1000 to be described below according to other various embodiments. Some of the camera modules 600, 700, 800, 900, and 1000 may have the same attribute (e.g., an angle of view, a focal length, an autofocus, a F-number (F-no), or an optical zoom), or at least one camera module may have one or more lens attributes other than lens attributes of other camera modules. The camera modules 500, 600, 700, 800, 900, and 1000 may include a flash, an image sensor IS, an image stabilizer, memory, or an image signal processor.

In describing one or more embodiments of the disclosure below, the components described therein that may be easily understood through the configuration of the preceding embodiment may be denoted by the same reference numerals or the reference numerals may be omitted. In addition, the detailed descriptions thereof may also be omitted.

Referring to FIGS. 10 to 13 together, the camera module 600 may include three lenses (e.g., L1, L2, and L3), cover glass G, and an image sensor IS.

[Table 3] below may show various data regarding three lenses (e.g., L1, L2, and L3) and components (e.g., the cover glass G) included in the camera module 600. Here, "obj" may refer to an object, and "img" may refer to an imaging surface of the image sensor IS. Furthermore, "S2 to S9" may refer to surfaces of three lenses (e.g., L1, L2, and L3) and the cover glass G. [Table 3] below may show data for the camera module 600 having a F-number of about 2.2, a half field of view (HFoV) of about 39.22 degrees, a focal length of about 0.838 mm, and an IMG HT of the image sensor IS of 0.704. The camera module 600 may include three lenses (e.g., L1, L2, and L3) and components (e.g., the cover glass G) having the data of [Table 3], and may satisfy the above-described formula (and/or at least one of the above-described formulas).

[Table 3]

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| obj | Sphere | Infinity | 25.000 | | | |
| S1 | Sphere | Infinity | 0.010 | | | |
| S2 | Asphere | -1000.000 | 0.279 | 1.543972 | 55.928 | 0.731 |
| S3 | Asphere | -0.392 | 0.191 | | | |

(continued)

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| S4 | Asphere | -0.181 | 0.190 | 1.67074 | 19.2299 | -1.138 |
| S5 | Asphere | -0.339 | 0.020 | | | |
| S6 | Asphere | 1.007 | 0.270 | 1.67074 | 19.2299 | 1.102 |
| S7 | Asphere | -2.171 | 0.200 | | | |
| S8 | Sphere | Infinity | 0.400 | 1.516798 | 64.1983 | |
| S9 | Sphere | Infinity | 0.179 | | | |
| img | Sphere | Infinity | 0.000 | | | |

The refractive index data of the above [Table 3] may represent the refractive index at a wavelength of, for example, 850.0000 nm. [Table 4] below may show aspherical coefficients of the three lenses (e.g., L1, L2, and L3) included in the camera module 600.

[Table 4]

| Lens surface (surface) | S2 | S3 | S4 | S5 | S6 | S7 |
|---|---|---|---|---|---|---|
| $k$ | 9.9000E+01 | 5.7548E-01 | -7.3832E-01 | -6.9720E-01 | -8.7709E+01 | -9.9000E+01 |
| $A_4$ | -4.5565E+00 | 1.1913E+00 | 1.3959E+01 | 1.8349E+00 | 4.0675E+00 | -2.5402E+00 |
| $A_6$ | 1.5235E+02 | 1.0701E+01 | 1.8452E+02 | 1.0073E+02 | -5.2366E+01 | 4.7167E+01 |
| $A_8$ | -1.4661E+04 | -1.1119E+03 | -8.6451E+03 | -1.9974E+03 | 5.6844E+02 | -4.2146E+02 |
| $A_{10}$ | 5.9249E+05 | 4.5927E+04 | 1.8360E+05 | 1.7815E+04 | -4.9315E+03 | 2.6984E+03 |
| $A_{12}$ | -1.2277E+07 | -7.3833E+05 | -2.0729E+06 | -8.1304E+04 | 3.1868E+04 | -1.1776E+04 |
| $A_{14}$ | 9.9758E+07 | 4.4974E+06 | 1.1805E+07 | 1.5143E+05 | -1.4552E+05 | 3.2085E+04 |
| $A_{16}$ | 1.8691E+08 | 0.0000E+00 | -2.3308E+07 | 0.0000E+00 | 4.3440E+05 | -5.1252E+04 |
| $A_{18}$ | -4.4807E+09 | 0.0000E+00 | 0.0000E+00 | 0.0000E+00 | -7.5860E+05 | 4.3711E+04 |
| $A_{20}$ | 0.0000E+00 | 0.0000E+00 | 0.0000E+00 | 0.0000E+00 | 5.9107E+05 | -1.5341E+04 |

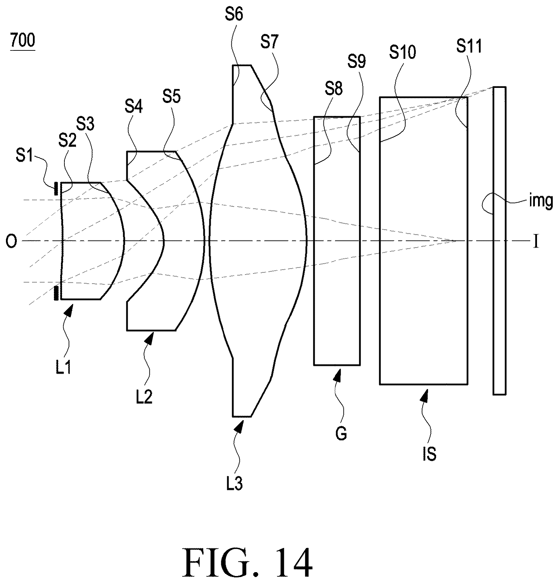

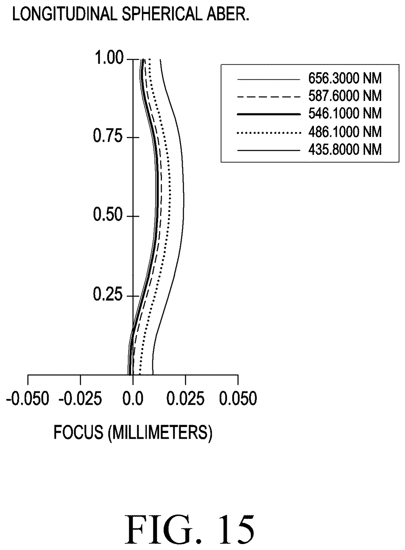

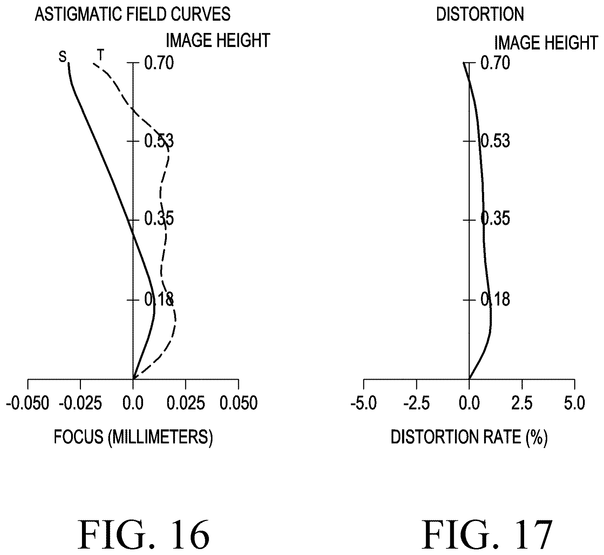

The longitudinal spherical aberrations in FIG. 11 may be represented for lights having wavelengths of, for example, about 870.0000 nm, about 860.0000 nm, about 850.0000 nm, about 840.0000 nm, or about 830.0000 nm, respectively. The astigmatism of FIG. 12 may represent a result obtained for light having a wavelength of about 850.0000 nm. The distortion of FIG. 13 may also represent a result obtained for light having a wavelength of about 850.0000 nm. FIG. 14 is a view illustrating a camera module according to an embodiment of the disclosure. FIG. 15 is a graph depicting a spherical aberration of a camera module according to the embodiment of FIG. 14. FIG. 16 is a graph depicting an astigmatism of a camera module according to the embodiment of FIG. 14. FIG. 17 is a graph depicting a distortion of a camera module according to the embodiment of FIG. 14.

Referring to FIGS. 14 to 17, the camera module 700 may include three lenses (e.g., L1, L2, and L3), a filter F, cover glass G, and an image sensor IS. Here, the filter F may be an IR cut filter that transmits light in the visible light band and blocks infrared (IR) light.

[Table 5] below may show various data regarding three lenses (e.g., L1, L2, and L3) and components (e.g., the filter F and/or the cover glass G) included in the camera module 700. Here, "obj" may refer to an object, and "img" may refer to an imaging surface of the image sensor IS. Furthermore, "S2 to S11" may refer to surfaces of three lenses (e.g., L1, L2, and L3), the filter (F), and the cover glass G. [Table 5] below may show data for the camera module 700 having a F-number of about 2.2, a half field of view (HFoV) of about 39.98 degrees, a focal length of about 0.838 mm, and an IMG HT of the image sensor IS of 0.704. The camera module 700 may include three lenses (e.g., L1, L2, and L3) and components (e.g., the filter F and the cover glass G) having the data of [Table 5], and may satisfy the above-described formula (and/or at least one of the above-described formulas).

[Table 5]

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| obj | Sphere | Infinity | 25.000 | | | |
| S1 | Sphere | Infinity | 0.010 | | | |
| S2 | Asphere | -34.532 | 0.300 | 1.543972 | 55.928 | 0.696 |
| S3 | Asphere | -0.378 | 0.186 | | | |
| S4 | Asphere | -0.168 | 0.190 | 1.67074 | 19.2299 | -0.586 |
| S5 | Asphere | -0.423 | 0.020 | | | |
| S6 | Asphere | 0.672 | 0.454 | 1.543972 | 55.928 | 0.726 |
| S7 | Asphere | -0.737 | 0.020 | | | |
| S8 | Sphere | Infinity | 0.210 | 1.516798 | 64.1983 | |
| S9 | Sphere | Infinity | 0.100 | | | |
| S10 | Sphere | Infinity | 0.400 | 1.516798 | 64.1983 | |
| S11 | Sphere | Infinity | 0.092 | | | |
| img | Sphere | Infinity | 0.000 | | | |

The refractive index data of the above [Table 5] may represent the refractive index at a wavelength of, for example, 587.6000 nm. [Table 6] below may show aspherical coefficients of the three lenses (e.g., L1, L2, and L3) included in the camera module 700.

[Table 6]

| Lens surface (surface) | S2 | S3 | S4 | S5 | S6 | S7 |
|---|---|---|---|---|---|---|
| k | -9.9000E+01 | 5.1252E-01 | -7.5736E-01 | -7.7685E-01 | -2.8214E+01 | -1.3007E+01 |
| $A_4$ | -3.9489E+00 | 1.4373E+00 | 2.3671E+01 | 2.1045E+00 | 2.0537E+00 | -3.9034E+00 |
| $A_6$ | 5.6267E+01 | 5.4621E+01 | -2.1619E+01 | 6.8696E+01 | -4.0057E+01 | 3.3014E+01 |
| $A_8$ | -1.2168E+03 | -2.7072E+03 | -4.3145E+03 | -1.1650E+03 | 5.7244E+02 | -2.0232E+02 |
| $A_{10}$ | -2.9461E+05 | 7.3983E+04 | 1.0754E+05 | 8.4086E+03 | -5.3836E+03 | 9.6804E+02 |
| $A_{12}$ | 1.9413E+07 | -9.5242E+05 | -1.1166E+06 | -3.1133E+04 | 3.3723E+04 | -2.9774E+03 |
| $A_{14}$ | -5.2144E+08 | 5.0222E+06 | 5.0587E+06 | 4.7534E+04 | -1.3892E+05 | 5.4527E+03 |
| $A_{16}$ | 6.3997E+09 | 0.0000E+00 | -3.2217E+06 | 0.0000E+00 | 3.6001E+05 | -5.7516E+03 |
| $A_{18}$ | -2.9142E+10 | 0.0000E+00 | 0.0000E+00 | 0.0000E+00 | -5.3129E+05 | 3.2299E+03 |
| $A_{20}$ | 0.0000E+00 | 0.0000E+00 | 0.0000E+00 | 0.0000E+00 | 3.3997E+05 | -7.4853E+02 |

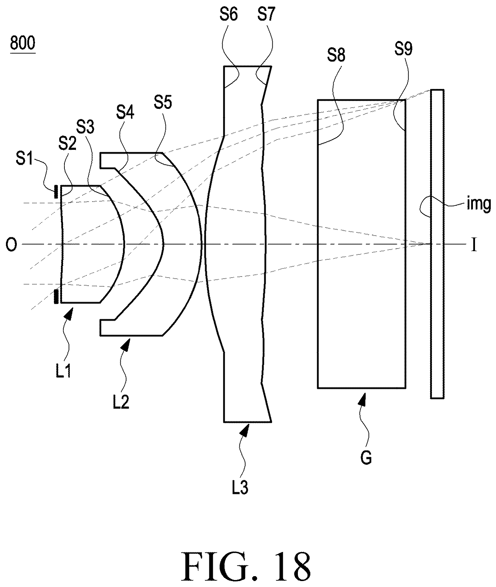

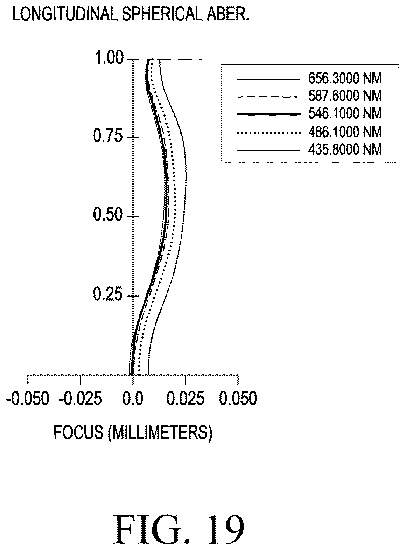

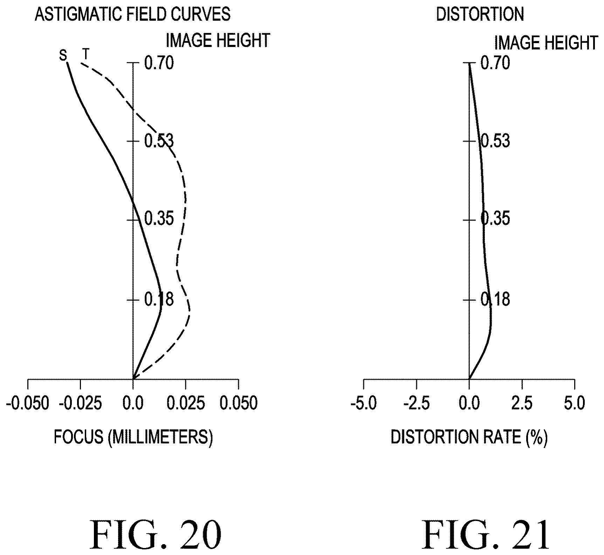

The longitudinal spherical aberrations in FIG. 15 may be represented for lights having wavelengths of, for example, about 656.3000 nm, about 587.6000 nm, about 546.1000 nm, about 486.1000 nm, or about 435.8000 nm, respectively. The astigmatism of FIG. 16 may represent a result obtained for light having a wavelength of about 546.1000 nm. The distortion of FIG. 17 may also represent a result obtained for light having a wavelength of about 546.1000 nm. FIG. 18 is a view illustrating a camera module according to an embodiment of the disclosure. FIG. 19 is a graph depicting a spherical aberration of a camera module according to the embodiment of FIG. 18. FIG. 20 is a graph depicting an astigmatism of a camera module according to the embodiment of FIG. 18. FIG. 21 is a graph depicting a distortion of a camera module according to the embodiment of FIG. 18.

Referring to FIGS. 18 to 21, the camera module 800 may include three lenses (e.g., L1, L2, and L3), cover glass G, and an image sensor IS.

[Table 7] below may show various data regarding three lenses (e.g., L1, L2, and L3) and components (e.g., the cover glass G) included in the camera module 800. Here, "obj" may refer to an object, and "img" may refer to an imaging surface of the image sensor IS. Furthermore, "S2 to S9" may refer to surfaces of three lenses (e.g., L1, L2, and L3) and the cover glass G. [Table 7] below may show data for the camera module 800 having a F-number of 2.2, a half field of view (HFoV) of 39.81 degrees, a focal length of 0.838 mm, and an IMG HT of the image sensor IS of 0.704. The camera module 800 may include three lenses (e.g., L1, L2, and L3) and components (e.g., the filter F and the cover glass G) having the data of [Table 7], and may satisfy the above-described formula (and/or at least one of the above-described formulas).

[Table 7]

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| obj | Sphere | Infinity | 25.000 | | | |
| S1 | Sphere | Infinity | 0.010 | | | |
| S2 | Asphere | -1000.000 | 0.303 | 1.543972 | 55.928 | 0.659 |
| S3 | Asphere | -0.360 | 0.173 | | | |
| S4 | Asphere | -0.169 | 0.190 | 1.67074 | 19.2299 | -0.637 |
| S5 | Asphere | -0.402 | 0.020 | | | |
| S6 | Asphere | 0.682 | 0.364 | 1.543972 | 55.928 | 0.795 |
| S7 | Asphere | -0.971 | 0.280 | | | |
| S8 | Sphere | Infinity | 0.400 | 1.516798 | 64.1983 | |
| S9 | Sphere | Infinity | 0.071 | | | |
| img | Sphere | Infinity | 0.000 | | | |

The refractive index data of the above [Table 7] may represent the refractive index at a wavelength of, for example, 587.6000 nm. [Table 8] below may show aspherical coefficients of the three lenses (e.g., L1, L2, and L3) included in the camera module 800.

[Table 8]

| Lens surface (surface) | S2 | S3 | S4 | S5 | S6 | S7 |
|---|---|---|---|---|---|---|
| k | 9.9000E+01 | 3.6532E-01 | -7.5623E-01 | -7.1447E-01 | -3.1728E+01 | -2.9618E+01 |
| $A_4$ | -3.3924E+00 | 2.3980E+00 | 2.4327E+01 | 2.3183E+00 | 2.4955E+00 | -4.4472E+00 |
| $A_6$ | -9.4913E+01 | 2.4524E+01 | -2.1859E+01 | 8.9387E+01 | -2.7636E+01 | 5.5766E+01 |
| $A_8$ | 1.5189E+04 | -1.6226E+03 | -4.7921E+03 | -1.6615E+03 | 3.5635E+02 | -4.2355E+02 |
| $A_{10}$ | -1.2932E+06 | 5.1343E+04 | 1.1789E+05 | 1.2926E+04 | -3.4395E+03 | 2.5640E+03 |
| $A_{12}$ | 5.4050E+07 | -7.1914E+05 | -1.2426E+06 | -5.1024E+04 | 2.3450E+04 | -1.0178E+04 |
| $A_{14}$ | -1.1985E+09 | 4.0733E+06 | 5.8284E+06 | 8.2594E+04 | -1.0834E+05 | 2.4033E+04 |
| $A_{16}$ | 1.3263E+10 | 0.0000E+00 | -4.8864E+06 | 0.0000E+00 | 3.1798E+05 | -3.2495E+04 |
| $A_{18}$ | -5.6979E+10 | 0.0000E+00 | 0.0000E+00 | 0.0000E+00 | -5.3272E+05 | 2.3260E+04 |
| $A_{20}$ | 0.0000E+00 | 0.0000E+00 | 0.0000E+00 | 0.0000E+00 | 3.8595E+05 | -6.8395E+03 |

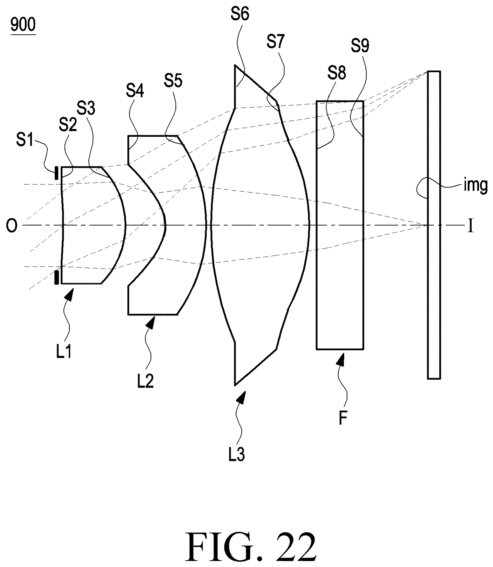

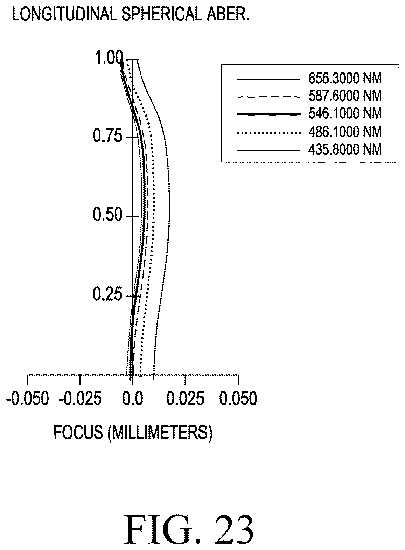

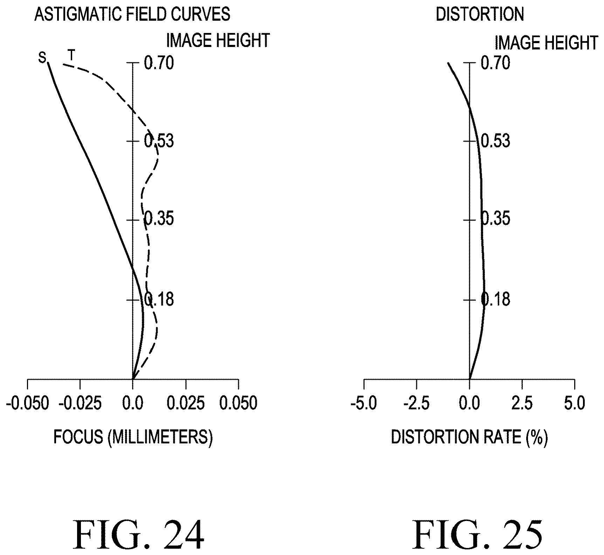

The longitudinal spherical aberrations in FIG. 19 may be represented for lights having wavelengths of, for example, about 656.3000 nm, about 587.6000 nm, about 546.1000 nm, about 486.1000 nm, or about 435.8000 nm, respectively. The astigmatism of FIG. 20 may represent a result obtained for light having a wavelength of about 546.1000 nm. The distortion of FIG. 21 may also represent a result obtained for light having a wavelength of about 546.1000 nm. FIG. 22 is a view illustrating a camera module according to an embodiment of the disclosure. FIG. 23 is a graph depicting a spherical aberration of a camera module according to the embodiment of FIG. 22. FIG. 24 is a graph depicting an astigmatism of a camera module according to the embodiment of FIG. 22. FIG. 25 is a graph depicting a distortion of a camera module according to the embodiment of FIG. 22.

Referring to FIGS. 22 to 25, the camera module 900 may include three lenses (e.g., L1, L2, and L3), a filter F, and an image sensor IS. Here, the filter F may be an IR cut filter.

[Table 9] below may show various data regarding three lenses (e.g., L1, L2, and L3) and components (e.g., the filter F) included in the camera module 900. Here, "obj" may refer to an object, and "img" may refer to an imaging surface of the image sensor IS. Furthermore, "S2 to S9" may refer to surfaces of three lenses (e.g., L1, L2, and L3) and the filter F. [Table 9] below may show data for the camera module 900 having a F-number of about 2.2, a half field of view (HFoV) of about 40.3 degrees, a focal length of about 0.838 mm, and an IMG HT of the image sensor IS of 0.704. The camera module 900 may include three lenses (e.g., L1, L2, and L3) and components (e.g., the filter F) having the data of [Table 9], and may satisfy the above-described formula (and/or at least one of the above-described formulas).

[Table 9]

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| obj | Sphere | Infinity | 25.000 | | | |
| S1 | Sphere | Infinity | 0.010 | | | |
| S2 | Asphere | -6.249 | 0.306 | 1.543972 | 55.928 | 0.736 |
| S3 | Asphere | -0.384 | 0.203 | | | |
| S4 | Asphere | -0.169 | 0.190 | 1.67074 | 19.2299 | -0.544 |
| S5 | Asphere | -0.453 | 0.020 | | | |
| S6 | Asphere | 0.625 | 0.537 | 1.543972 | 55.928 | 0.683 |
| S7 | Asphere | -0.647 | 0.050 | | | |
| S8 | Sphere | Infinity | 0.210 | 1.516798 | 64.1983 | |
| S9 | Sphere | Infinity | 0.426 | | | |
| img | Sphere | Infinity | 0.000 | | | |

The refractive index data of the above [Table 9] may represent the refractive index at a wavelength of, for example, 587.6000 nm. [Table 10] below may show aspherical coefficients of the three lenses (e.g., L1, L2, and L3) included in the camera module 900.

[Table 10]

| Lens surface (surface) | S2 | S3 | S4 | S5 | S6 | S7 |
|---|---|---|---|---|---|---|
| k | 1.1135E+00 | 4.3133E-01 | -7.5763E-01 | -8.0282E-01 | -1.7480E+01 | -1.1190E+01 |
| $A_4$ | -3.5018E+00 | 9.6061E-01 | 2.4102E+01 | 2.1230E+00 | 2.3414E-01 | -4.3578E+00 |
| $A_6$ | -7.0799E+00 | 5.9858E+01 | -1.0013E+02 | 4.4029E+01 | -6.9392E+00 | 3.4822E+01 |
| $A_8$ | 4.9782E+03 | -2.7065E+03 | -1.4363E+03 | -7.1576E+02 | 1.2269E+02 | -2.0540E+02 |
| $A_{10}$ | -5.8358E+05 | 6.6294E+04 | 4.9851E+04 | 4.8210E+03 | -1.1966E+03 | 8.5640E+02 |
| $A_{12}$ | 2.6302E+07 | -7.9237E+05 | -4.7601E+05 | -1.6925E+04 | 7.5083E+03 | -2.2218E+03 |
| $A_{14}$ | -5.9353E+08 | 3.9052E+06 | 1.4336E+06 | 2.4937E+04 | -3.0503E+04 | 3.4328E+03 |
| $A_{16}$ | 6.5133E+09 | 0.0000E+00 | 4.4381E+06 | 0.0000E+00 | 7.6774E+04 | -3.0714E+03 |

(continued)

| Lens surface (surface) | S2 | S3 | S4 | S5 | S6 | S7 |
|---|---|---|---|---|---|---|
| $A_{18}$ | -2.7321E+10 | 0.0000E+00 | 0.0000E+00 | 0.0000E+00 | -1.0856E+05 | 1.4700E+03 |
| $A_{20}$ | 0.0000E+00 | 0.0000E+00 | 0.0000E+00 | 0.0000E+00 | 6.5770E+04 | -2.9146E+02 |

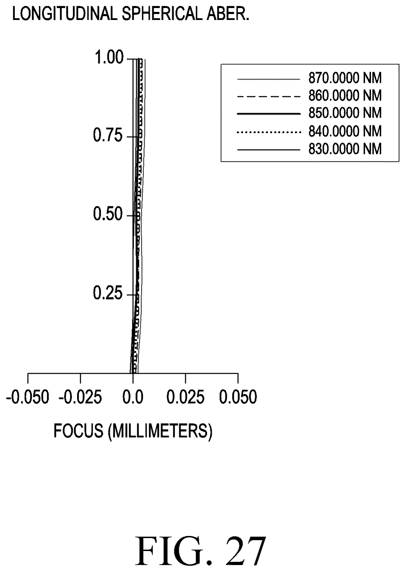

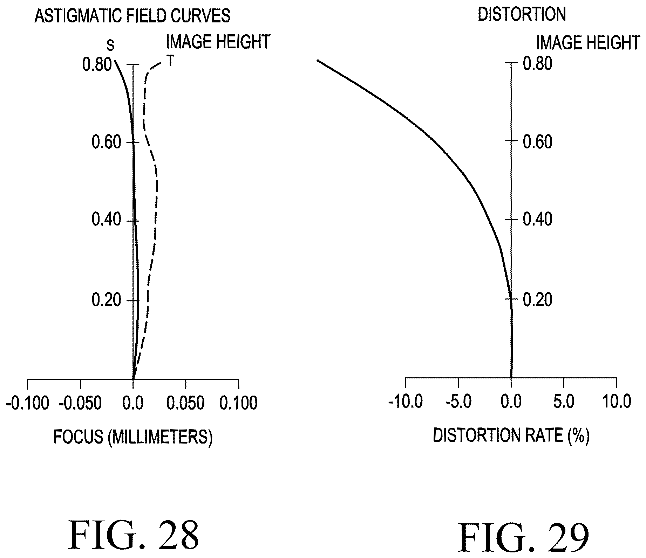

The longitudinal spherical aberrations in FIG. 23 may be represented for lights having wavelengths of, for example, about 656.3000 nm, about 587.6000 nm, about 546.1000 nm, about 486.1000 nm, or about 435.8000 nm, respectively. The astigmatism of FIG. 24 may represent a result obtained for light having a wavelength of about 546.1000 nm. The distortion of FIG. 25 may also represent a result obtained for light having a wavelength of about 546.1000 nm. FIG. 26 is a view illustrating a camera module according to an embodiment of the disclosure. FIG. 27 is a graph depicting a spherical aberration of a camera module according to the embodiment of FIG. 26. FIG. 28 is a graph depicting an astigmatism of a camera module according to the embodiment of FIG. 26. FIG. 29 is a graph depicting a distortion of a camera module according to the embodiment of FIG. 26.

Referring to FIGS. 26 to 29, the camera module 1000 may include four lenses (e.g., L1, L2, L3, and L4), a filter F, and an image sensor IS. Here, the filter F may be an IR cut filter.

According to an embodiment, the camera module 1000 may include, in order from the closest to the object side, a first lens L1, a second lens L2, a third lens L3, and a fourth lens L4. Here, the first lens L1 may have positive refractive power, the second lens L2 may have positive refractive power, the third lens L3 may have negative refractive power, and the fourth lens L4 may have positive refractive power.

In a case where the camera module 1000 includes four lenses (e.g., L1, L2, L3, and L4), "$L_{1-3}$" in [Formula 1] and [Formula 2] above-described may indicate a distance from an object-side surface of the first lens L1 arranged closest to the object side to an image-side surface of the fourth lens L4 arranged farthest from the object side. In addition, "BFL" in [Formula 3] may mean a distance from an image-side surface of the fourth lens L4 arranged farthest from the object side to an imaging plane.

The following [Table 11] may show various data regarding four lenses (e.g., L1, L2, L3, and L4) and components (e.g., the filter G) included in the camera module 1000. Here, "obj" may refer to an object, and "img" may refer to an imaging surface of the image sensor IS. Furthermore, "S2 to S11" may refer to surfaces of four lenses (e.g., L1, L2, L3, and L4) and the filter F. [Table 11] below may show data for the camera module 1000 having a F-number of about 2.2, a half field of view (HFoV) of about 44.8 degrees, a focal length of about 0.804 mm, and an IMG HT of the image sensor IS of 0.838. The camera module 1000 may include four lenses (e.g., L1, L2, L3, and L4) and components (e.g., the filter F) having the data of [Table 11], and may satisfy the above-described formula (and/or at least one of the above-described formulas).

[Table 11]

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| obj | Sphere | Infinity | 400.0 | | | |
| S1 | Sphere | Infinity | 0.010 | | | |
| S2 | Asphere | -12.321 | 0.231 | 1.535 | 55.752 | 1.032 |
| S3 | Asphere | -0.525 | 0.090 | | | |
| S4 | Asphere | -0.441 | 0.245 | 1.63491 | 23.967 | 1.679 |
| S5 | Asphere | -0.374 | 0.039 | | | |
| S6 | Asphere | -0.243 | 0.248 | 1.535 | 55.752 | -1.812 |
| S7 | Asphere | -0.441 | 0.020 | | | |
| S8 | Asphere | 0.449 | 0.254 | 1.535 | 55.752 | 2.525 |
| S9 | Asphere | 0.546 | 0.142 | | | |
| S10 | Sphere | Infinity | 0.110 | 1.516798 | 64.1983 | |
| S11 | Sphere | Infinity | 0.520 | | | |

(continued)

| Lens surface (surface) | Lens surface type (surface type) | Curvature radius (y radius) | Thickness | Refractive index (Nd) | Abbe number (Vd) | Focal length (EFL) |
|---|---|---|---|---|---|---|
| img | Sphere | Infinity | 0.000 | | | |

The refractive index data of the above [Table 11] may represent the refractive index at a wavelength of, for example, 850.0000 nm. [Table 12] and [Table 13] below may show aspherical coefficients of the four lenses (e.g., L1, L2, L3, and L4) included in the camera module 1000.

[Table 12]

| Lens surface (surface) | S2 | S3 | S4 | S5 | S6 | S7 |
|---|---|---|---|---|---|---|
| k | 9.9000E+01 | -1.6608E+01 | 3.4039E-01 | -2.1684E+00 | -2.9324E+00 | -2.5041E+00 |
| $A_4$ | -1.5495E+00 | -1.4597E+01 | -7.4800E-01 | -2.1243E+00 | -6.9946E+00 | -1.1684E+00 |
| $A_6$ | -3.8813E+01 | 2.7409E+02 | 2.4786E+02 | 1.3777E+02 | 2.9345E+02 | -2.1058E+01 |
| $A_8$ | 1.6425E+03 | -5.4482E+03 | -2.4887E+04 | -2.6218E+03 | -5.4203E+03 | 3.6506E+02 |
| $A_{10}$ | -6.0395E+04 | 5.6638E+04 | 1.3954E+06 | 2.7026E+04 | 5.8418E+04 | -4.1746E+03 |
| $A_{12}$ | 1.0323E+06 | -2.6174E+05 | -4.9388E+07 | -1.6077E+05 | -2.6540E+05 | 3.6375E+04 |
| $A_{14}$ | -7.4728E+06 | -5.1283E+04 | 1.0716E+09 | 3.9768E+05 | -1.0768E+06 | -2.2273E+05 |
| $A_{16}$ | 0.0000E+00 | 0.0000E+00 | -1.3779E+10 | 0.0000E+00 | 1.8750E+07 | 9.5262E+05 |
| $A_{18}$ | 0.0000E+00 | 0.0000E+00 | 9.5417E+10 | 0.0000E+00 | -8.2031E+07 | -2.5023E+06 |
| $A_{20}$ | 0.0000E+00 | 0.0000E+00 | -2.7092E+11 | 0.0000E+00 | 1.2483E+08 | 2.9203E+06 |

[Table 13]

| Lens surface (surface) | S8 | S9 |
|---|---|---|
| k | -4.0051E+00 | -3.9788E+00 |
| $A_4$ | 1.9955E+00 | 2.1288E+00 |
| $A_6$ | -3.4494E+01 | -2.9807E+01 |
| $A_8$ | 2.8386E+02 | 1.8132E+02 |
| $A_{10}$ | -1.7198E+03 | -7.6983E+02 |
| $A_{12}$ | 7.3218E+03 | 2.2936E+03 |
| $A_{14}$ | -2.0766E+04 | -4.6265E+03 |
| $A_{16}$ | 3.6823E+04 | 5.9119E+03 |
| $A_{18}$ | -3.6550E+04 | -4.2488E+03 |
| $A_{20}$ | 1.5417E+04 | 1.2954E+03 |

The longitudinal spherical aberrations in FIG. 27 may be represented for lights having wavelengths of, for example, about 870.0000 nm, about 860.0000 nm, about 850.0000 nm, about 840.0000 nm, or about 830.0000 nm, respectively. The astigmatism of FIG. 28 may represent a result obtained for light having a wavelength of about 850.0000 nm. The distortion of FIG. 29 may also represent a result obtained for light having a wavelength of about 850.0000 nm. In the above-described embodiments, various data regarding the lenses and peripheral components may be identified with respect to the camera modules (e.g., 400, 500, 600, 700, 800, 900, and 1000) and/or the electronic device including the camera modules (e.g., 400, 500, 600, 700, 800, 900, and 1000). The data may satisfy the above-described requirements, for example, the results of [Formulas 1 to 5] as in [Table 14] below.

[Table 14]

|  | Embodiment 1 | Embodiment 2 | Embodiment 3 | Embodiment 4 | Embodiment 5 | Embodiment 6 |
|---|---|---|---|---|---|---|
| Formula 1 | 0.958 | 1.022 | 1.172 | 1.173 | 1.534 | 1.09 |
| Formula 2 | 1.391 | 1.349 | 1.634 | 1.491 | 1.784 | 1.061 |
| Formula 3 | 1.021 | 0.930 | 0.981 | 0.895 | 0.819 | 0.636 |
| Formula 4 | 55.752 | 55.928 | 55.928 | 55.928 | 55.928 | 55.752 |
| Formula 5 | 1.671 | 1.671 | 1.671 | 1.671 | 1.671 | 1.634 |

[Table 15] below may show the viewing angle conditions for each embodiment.

[Table 15]

|  | Embodiment 1 | Embodiment 2 | Embodiment 3 | Embodiment 4 | Embodiment 5 | Embodiment 6 |
|---|---|---|---|---|---|---|
| Angle of view | 79.760 | 78.440 | 79.940 | 79.620 | 80.600 | 89.4 |

In [Table 14] and [Table 15] above, "Embodiment 1", "Embodiment 2", "Embodiment 3", "Embodiment 4", and "Embodiment 5" may be referred to as the camera module 500 shown in FIG. 6, the camera module 600 shown in FIG. 10, the camera module 700 shown in FIG. 14, the camera module 800 shown in FIG. 18, and the camera module 900 shown in FIG. 22, respectively. In addition, "Embodiment 6" may refer to the camera module 1000 shown in in FIG. 26. The above-described camera modules (e.g., 400, 500, 600, 700, 800, and 900) according to various embodiments described above may be mounted to an electronic device (e.g., an optical device) and used. The electronic device (e.g., an optical device) may further include an application processor (AP) in addition to the image sensor (IS), and may drive, for example, an operation system or an application program through the application processor (AP) to control multiple hardware or software components connected to the application processor (AP) and perform various data processing and operations. For example, the application processor (AP) may further include a graphic processing unit (GPU) and/or an image signal processor. When the image signal processor is included in the application processor (AP), the image (or video) obtained by the image sensor (IS) may be stored or output by using the application processor (AP).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, the camera module 400, 500, 600, 700, 800, 900, or 1000 may include a lens assembly and an image sensor (IS) 420 arranged to receive light focused or guided by the lens assembly. The lens assembly may include at least three lenses L1, L2, and L3 arranged along the optical axis direction oriented to an image side from an object side, and, among the at least three lenses, a first lens L1 disposed closest to the object side may have a positive refractive power, and the object-side surface of the first lens may be concave. The camera module may satisfy [Formula 1] below.

$$[\text{Formula 1}]$$
$$0.6 \leq \frac{(L_{1\text{-}3})f}{BFL} \leq 1.6$$

(Here, "$L_{1\text{-}3}$" is a distance from the object-side surface of the lens L1 disposed closest to the object side to the image-side surface of the lens L3 or L4 disposed farthest from the object side, "f" is the focal length of the camera module, and "BFL" is a distance from the image-side surface of the lens L3 or L4 disposed farthest from the object side to the imaging plane.)

According to an embodiment, when the lens assembly includes the first lens L1, the second lens L2, and the third lens L3 in order from the object side closer to the object, the first lens may have positive refractive power, the second lens may have negative refractive power, and the third lens may have positive refractive power.

According to an embodiment, an aperture stop sto is positioned between the first lens and the object, and a field of view (FOV) of the camera module may be 70 degrees or more and 90 degrees or less.

According to an embodiment, the camera module may satisfy [Formula 2] below.

$$[\text{Formula 2}]$$
$$0.6 \leq \frac{L_{1\text{-}3}}{IH} \leq 2.0$$

(Here, "$L_{1\text{-}3}$" is a distance from the object-side surface of the lens L1 arranged closest to the object side to the image-side surface of the lens L3 or L4 arranged farthest from the object side, and "IH" is a maximum height of the imaging plane.)

According to an embodiment, the camera module may satisfy [Formula 3] below.

[Formula 3]

$$0.6 \le \frac{BFL}{f} \le 1.2$$

(Here, "BFL" is a distance from the image side of the lens L3 or L4 arranged farthest from the object side to the image plane, and "f" is the focal length of the camera module.)

According to an embodiment, the camera module may include a first lens having an Abbe number satisfying [Formula 4] below.

[Formula 4]

$$50 \le Vd1 \le 60$$

(Here, "Vd1" is the Abbe number of the first lens L1.)

According to an embodiment, the first lens L1 may have a meniscus shape in which both the object-side surface S2 and the image-side surface S3 are concave toward the object side.

According to an embodiment, the second lens L2 may have a meniscus shape in which both the object-side surface S4 and the image-side surface S5 are concave toward the object side.

According to an embodiment, the second lens (L2) has a refractive index satisfying [Formula 5] below and may be made of a synthetic resin material.

[Formula 5]

$$1.6 \le nd2 \le 1.75$$

(Here, "nd2" is a refractive index of the second lens L2.)

According to an embodiment, the third lens L3 may be a lens in which the object-side surface S6 is convex toward the object and the image-side surface S7 is convex toward the image.

According to an embodiment, the at least three lenses may be made of a synthetic resin material.

According to an embodiment, the camera module may include a fixed-focus-type camera module.

According to an embodiment, the filter (F) 425 is further included, and the filter (F) 425 may include an IR cut filter or a band pass filter.

According to an embodiment, cover glass (G) 440 configured to surround at least a portion of the image sensor may be further included.

According to an embodiment, the image sensor (IS) 420 may be provided by a chip scale package (CSP) method.

According to an embodiment of the disclosure, an electronic device 101, 102, 104, 200, or 300 may include a camera module 400, 500, 600, 700, 800, 900, or 1000 including a lens assembly and an image sensor (IS) 420 arranged to receive light focused or guided by the lens assembly, and a processor 120 configured to obtain an image of an object using the camera module. The lens assembly may include at least three lenses L1, L2, and L3 arranged along the optical axis direction oriented to an image side from an object side, and, among the at least three lenses, a first lens L1 disposed closest to the object side may have a positive refractive power, and the object-side surface of the first lens may be concave. The electronic device may satisfy [Formula 1] below.

[Formula 1]

$$0.6 \le \frac{(L_{1\text{-}3})f}{BFL} \le 1.6$$

(Here, "$L_{1\text{-}3}$" is a distance from the object-side surface of the lens L1 disposed closest to the object side to the image-side surface of the lens L3 or L4 disposed farthest from the object side, "f" is the focal length of the camera module, and "BFL" is a distance from the image-side surface of the lens L3 or L4 disposed farthest from the object side to the imaging plane.)

According to an embodiment, the electronic device may include a fixed-focus-type camera module.

According to an embodiment, the electronic device may further include the filter (F) 425, and the filter (F) 425 may include an IR cut filter or a band pass filter.

According to one embodiment, the electronic device may further include cover glass configured to surround at least a portion of the image sensor (IS) 420.

According to an embodiment, the image sensor may be provided by a chip scale package (CSP) method.

As mentioned above, in the detailed description regarding various embodiments of the disclosure, specific embodiments have been described, but it will be apparent to those of ordinary skill in the art that various modifications are possible without departing from the subject matter of the disclosure. For example, the dimensions of the at least three lenses and the like may be appropriately configured depending on a structure and requirement of an actual lens assembly to be manufactured or a camera and/or electronic device on which such lens assembly will be mounted, the actual use environment, and the like.

The technical subjects pursued in the disclosure may not be limited to the above-mentioned technical subjects, and other technical subjects which are not mentioned herein may be clearly understood from the following description by those skilled in the art to which the disclosure pertains.

Advantageous effects obtainable from the disclosure may not be limited to the above-mentioned effects, and other effects which are not mentioned herein may be clearly understood from the following description by those skilled in the art to which the disclosure pertains.

**Claims**

1. A camera module (400; 500; 600; 700; 800; 900; 1000), comprising:

   a lens assembly; and
   an image sensor (420; IS) disposed to receive light focused or guided by the lens assembly,
   wherein the lens assembly comprises:
   at least three lenses (L1;L2;L3) aligned along an optical axis direction oriented to an image side from an object side and, wherein, among the at least three lenses, a first lens (L1) disposed closest to the object side has a positive refractive power and an object side surface of the first lens has a concave shape, and
   wherein the camera module satisfies the following [formula 1].

   [formula 1]

   $$0.6 \leq \frac{(L_{1\text{-}3})f}{BFL} \leq 1.6$$

   (here, 'L$_{1\text{-}3}$' is a distance from the object side surface of the first lens (L1) disposed closest to the object side to an image side surface of a lens (L3; L4) disposed farthest from the object side, 'f is a focal length of the camera module, 'BFL' is a distance from the image side surface of the lens (L3; L4) disposed farthest from the object side to an image plane.)

2. The camera module of claim 1, wherein the lens assembly includes a first lens (L1), a second lens (L2), and a third lens (L3) in order of proximity from the object side,
   wherein the first lens has a positive refractive power, and the second lens has a negative refractive power, and the third lens has a positive refractive power.

3. The camera module of claims 1 or 2, comprising:

   an aperture disposed between the first lens and the object,
   wherein a field of view (FOV) of the camera module is greater than or equal to 70 degrees and less than or equal to 90 degrees

4. The camera module of any one of claims 1 to 3,

   wherein the camera module satisfies the following [formula 2].

   [formula 2]

   $$0.6 \leq \frac{L_{1\text{-}3}}{IH} \leq 2.0$$

(here, 'L$_{1-3}$' is a distance from the object side surface of the first lens (L1) disposed closest to the object side to the image side surface of the lens (L3; L4) disposed farthest from the object side, 'IH' is a maximum height of the imaging plane.)

5. The camera module of any one of claims 1 to 4,

wherein the camera module satisfies the following [formula 3],

[formula 3]

$$0.6 \leq \frac{BFL}{f} \leq 1.2$$

(here, 'BFL' is a distance from the image side surface of the lens (L3; L4) disposed farthest from the object side to the image plane, 'f is a focal length of the camera module.)

6. The camera module of any one of claims 1 to 5,

wherein an Abbe's number of the first lens satisfies the following [formula 4].

[formula 4]

$$50 \leq V_{d1} \leq 60$$

(here, 'V$_{d1}$' is an Abbe's number of the first lens (L1).)

7. The camera module of any one of claims 1 to 6,
wherein the first lens (L1) is a meniscus shaped lens having the object side surface (S2) and an image side surface (S3) are concave toward the object side.

8. The camera module of any one of claims 1 to 7,
wherein the second lens (L2) is a meniscus-shaped lens having both an object side surface (S4) and an image side surface (S5) concave toward the object side.

9. The camera module of any one of claims 1 to 8,

wherein the second lens (L2) has a refractive index that satisfies the following [formula 5] and is formed of a synthetic resin material,

[formula 5]
$$1.6 \leq nd2 \leq 1.75$$

(here, 'nd2' is a refractive index of the second lens (L2).)

10. The camera module of any one of claims 1 to 9,
wherein the third lens (L3) has an object side surface (S6) convex toward the object side and an image side surface (S7) convex toward the image side.

11. The camera module of any one of claims 1 to 10,
wherein the at least three lenses are formed of a synthetic resin material.

12. The camera module of any one of claims 1 to 11,
wherein the camera module comprises a fixed-focus-type camera module.

13. The camera module of any one of claims 1 to 12, further comprising:

a filter (425; F),
wherein the filter (425; F) comprises an IR cut filter or a band pass filter.

14. The camera module of any one of claims 1 to 13, further comprising:
a cover glass (440; G) covering at least a portion of the image sensor.

15. An electronic device (101; 102; 104; 200; 300) comprising the camera module of any one of claims 1 to 14, wherein the image sensor includes a processor (120) configured to obtain an image of a subject by using the camera module.

ELECTRONIC DEVICE 101

**150** INPUT MODULE

**155** SOUND OUTPUT MODULE

**160** DISPLAY MODULE

**130** MEMORY

**132** VOLATILE MEMORY

**134** NON-VOLATILE MEMORY

**136** INTERNAL MEMORY

**138** EXTERNAL MEMORY

**189** BATTERY

**188** POWER MANAGEMENT MODULE

**120** PROCESSOR

**121** MAIN PROCESSOR

**123** AUXILIARY PROCESSOR

**190** COMMUNICATION MODULE

**192** WIRELESS COMMUNICATION MODULE

**194** WIRED COMMUNICATION MODULE

**196** SUBSCRIBER IDENTIFICATION MODULE

**197** ANTENNA MODULE

**170** AUDIO MODULE

**176** SENSOR MODULE

**177** INTERFACE

**178** CONNECTING TERMINAL

**179** HAPTIC MODULE

**180** CAMERA MODULE

**100**

**140** PROGRAM

**146** APPLICATION

**144** MIDDLEWARE

**142** OPERATING SYSTEM

**199** SECOND NETWORK

**198** FIRST NETWORK

**104** ELECTRONIC DEVICE

**102** ELECTRONIC DEVICE

**108** SERVER

FIG. 1

EP 4 730 824 A1

FIG. 2

FIG. 3

FIG. 4

FIG. 5

FIG. 6

LONGITUDINAL SPHERICAL ABER.

FIG. 7

ASTIGMATIC FIELD CURVES

S    IMAGE HEIGHT

DISTORTION

IMAGE HEIGHT

FOCUS (MILLIMETERS)

DISTORTION RATE (%)

FIG. 8

FIG. 9

FIG. 10

LONGITUDINAL SPHERICAL ABER.

FIG. 11

ASTIGMATIC FIELD CURVES

DISTORTION

IMAGE HEIGHT

IMAGE HEIGHT

S   T   0.70

0.70

0.53

0.53

0.35

0.35

0.18

0.18

-0.050  -0.025   0.0   0.025  0.050

-5.0   -2.5   0.0   2.5   5.0

FOCUS (MILLIMETERS)

DISTORTION RATE (%)

# FIG. 12

# FIG. 13

FIG. 14

LONGITUDINAL SPHERICAL ABER.

FIG. 15

ASTIGMATIC FIELD CURVES

IMAGE HEIGHT

S   T   0.70

0.53

0.35

0.18

-0.050  -0.025   0.0   0.025  0.050

FOCUS (MILLIMETERS)

DISTORTION

IMAGE HEIGHT

0.70

0.53

0.35

0.18

-5.0   -2.5    0.0    2.5    5.0

DISTORTION RATE (%)

FIG. 16          FIG. 17

FIG. 18

LONGITUDINAL SPHERICAL ABER.

| | 656.3000 NM |
| | 587.6000 NM |
| | 546.1000 NM |
| | 486.1000 NM |
| | 435.8000 NM |

FOCUS (MILLIMETERS)

FIG. 19

FIG. 20

FIG. 21

FIG. 22

LONGITUDINAL SPHERICAL ABER.

| | |
|---|---|
| ——— | 656.3000 NM |
| ‑ ‑ ‑ ‑ | 587.6000 NM |
| —— | 546.1000 NM |
| ·········· | 486.1000 NM |
| ——— | 435.8000 NM |

FOCUS (MILLIMETERS)

FIG. 23

ASTIGMATIC FIELD CURVES

IMAGE HEIGHT

S    T

0.70

0.53

0.35

0.18

-0.050  -0.025   0.0   0.025  0.050

FOCUS (MILLIMETERS)

DISTORTION

IMAGE HEIGHT

0.70

0.53

0.35

0.18

-5.0    -2.5    0.0    2.5    5.0

DISTORTION RATE (%)

## FIG. 24

## FIG. 25

## FIG. 26

FIG. 27

ASTIGMATIC FIELD CURVES

S          IMAGE HEIGHT

0.80 ⟍  ┬  ╱ T

0.60 ┼

0.40 ┼

0.20 ┼

-0.100  -0.050   0.0   0.050  0.100

FOCUS (MILLIMETERS)

DISTORTION

IMAGE HEIGHT

┬ 0.80

┼ 0.60

┼ 0.40

┼ 0.20

-10.0   -5.0   0.0   5.0   10.0

DISTORTION RATE (%)

# FIG. 28

# FIG. 29

## INTERNATIONAL SEARCH REPORT

| International application No. |
|---|
| **PCT/KR2024/009605** |

| A. | CLASSIFICATION OF SUBJECT MATTER |
|---|---|

**H04N 23/54**(2023.01)i; **H04N 23/55**(2023.01)i; **H04N 23/57**(2023.01)i; **G03B 17/12**(2006.01)i; **G03B 30/00**(2021.01)i; **G02B 13/00**(2006.01)i; **G02B 15/14**(2006.01)i; **G02B 5/20**(2006.01)i

According to International Patent Classification (IPC) or to both national classification and IPC

| B. | FIELDS SEARCHED |
|---|---|

Minimum documentation searched (classification system followed by classification symbols)

H04N 23/54(2023.01); G02B 3/00(2006.01); G03B 17/12(2006.01); G03B 9/02(2006.01); H04N 23/00(2023.01); H04N 23/55(2023.01); H04N 23/60(2023.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈 어셈블리(lens assembly), 복수의 렌즈(multiple lenses), 피사체 측(object side), 결상면 측(image plane side), 초점 거리(focal length), 후방 초점 거리(back focal length)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0033756 A (SAMSUNG ELECTRONICS CO., LTD.) 17 March 2022 (2022-03-17) See paragraphs [0004], [0021], [0027], [0035] and [0047]-[0048]; and claims 1, 7 and 14. | 1-15 |
| A | KR 10-2023-0066411 A (COREPHOTONICS LTD.) 15 May 2023 (2023-05-15) See claim 1. | 1-15 |
| A | KR 10-2022-0164959 A (SAMSUNG ELECTRONICS CO., LTD.) 14 December 2022 (2022-12-14) See claim 5. | 1-15 |
| A | KR 10-2011-0073044 A (LG INNOTEK CO., LTD.) 29 June 2011 (2011-06-29) See paragraphs [0001]-[0011]. | 1-15 |
| A | KR 10-2023-0059101 A (SAMSUNG ELECTRONICS CO., LTD.) 03 May 2023 (2023-05-03) See paragraph [0094]. | 1-15 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2024** | **16 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
Information on patent family members

International application No.

**PCT/KR2024/009605**

| Patent document cited in search report | | | Publication date (day/month/year) | Patent family member(s) | | | Publication date (day/month/year) |
|---|---|---|---|---|---|---|---|
| KR | 10-2022-0033756 | A | 17 March 2022 | EP | 4195649 | A1 | 14 June 2023 |
| | | | | WO | 2022-055266 | A1 | 17 March 2022 |
| KR | 10-2023-0066411 | A | 15 May 2023 | EP | 4244670 | A1 | 20 September 2023 |
| | | | | KR | 10-2024-0009432 | A | 22 January 2024 |
| | | | | KR | 10-2610118 | B1 | 04 December 2023 |
| | | | | US | 11985407 | B2 | 14 May 2024 |
| | | | | US | 2023-0308737 | A1 | 28 September 2023 |
| | | | | US | 2024-0302628 | A1 | 12 September 2024 |
| | | | | WO | 2023-079403 | A1 | 11 May 2023 |
| KR | 10-2022-0164959 | A | 14 December 2022 | WO | 2022-260238 | A1 | 15 December 2022 |
| KR | 10-2011-0073044 | A | 29 June 2011 | KR | 10-1621893 | B1 | 17 May 2016 |
| KR | 10-2023-0059101 | A | 03 May 2023 | | None | | |

Form PCT/ISA/210 (patent family annex) (July 2022)